# EUROPEAN PATENT APPLICATION

(11) **EP 4 447 332 A1**
(43) Date of publication of application: **16.10.2024**
(21) Application number: 22914240.1
(22) Date of filing: 13.12.2022
(51) Int. Cl.: H04B 5/00, G06K 7/00

(54) **IDENTIFICATION METHOD AND APPARATUS**

(30) Priority: 29.12.2021 CN 202111643061
(71) Applicant: Huawei Technologies Co., Ltd., Shenzhen, Guangdong 518129 (CN)
(72) Inventor: LI, Chenwan, Shenzhen, Guangdong 518129 (CN); WU, Yiling, Shenzhen, Guangdong 518129 (CN)
(74) Representative: Isarpatent
(86) International application number: PCT/CN2022/138742
(87) International publication number: WO 2023/124985

(57) **Abstract**

Embodiments of this application provide an identification method and apparatus. The method includes: A first device sends a first command to at least one device, where the at least one device includes a second device, the first command is used to obtain first prefix information, the first prefix information includes k bits, and k is an integer greater than or equal to 1. The first device receives a first random number from the second device, where the first random number corresponds to the first prefix information. The first device determines, based on the first random number, that the second device accesses the first device. This application provides the method for identifying the second device by the first device. This can identify the second device, and implement inventory and random access of the second device.

## Description

This application claims priority to Chinese Patent Application No. 202111643061.6, filed with the China National Intellectual Property Administration on December 29, 2021 and entitled "IDENTIFICATION METHOD AND APPARATUS", which is incorporated herein by reference in its entirety.

### TECHNICAL FIELD

Embodiments of this application relate to the communication field, and more specifically, to an identification method and apparatus.

### BACKGROUND

With rapid development of wireless communication, to meet and enrich increasing requirements of people, a 5th generation mobile communication system emerges, and can effectively cope with an explosive growth of mobile data traffic in the future and support massive device connections and various emerging new services.

A radio frequency identification (radio frequency identification, RFID) technology automatically identifies a target object and obtains related data through a radio frequency signal. A passive RFID technology is widely used in the internet of things (internet of things, IoT) field for its lower power consumption and costs.

In an RFID system, according to an inventory procedure, after successful random access, a tag can send capability information of the tag to a reader/writer and complete a corresponding instruction of the reader/writer.

Therefore, how the reader/writer identifies the tag, to implement inventory or random access is an urgent problem to be resolved.

### SUMMARY

This application provides an identification method and apparatus, to identify a device, and implement inventory and random access of the device.

According to a first aspect, an identification method is provided. The method may be performed by a first device (for example, a reader/writer), or may be performed by a chip or a circuit used in the first device. This is not limited in this application.

The method includes: The first device sends a first command to at least one device, where the at least one device includes a second device, the first command is used by the at least one device to obtain first prefix information, the first prefix information includes k bits, and k is an integer greater than or equal to 1. The first device receives a first random number from the second device, where the first random number corresponds to the first prefix information. The first device determines, based on the first random number, that the second device accesses the first device.

According to the solution provided in this application, the first device determines, by sending the first command and receiving the first random number, that the second device performs random access to the first device. A random number is used to replace a complete identifier of the second device for inventory. This provides another method for identifying the second device, and implements random access of the second device.

It should be noted that a quantity of bits of the first random number fed back by the second device may be less than a quantity of bits of the complete identifier of the second device. In this implementation, feeding back the random number instead of feeding back complete identifier information can reduce an inventory delay and transmission signaling overheads, and improve random access efficiency of the second device.

In embodiments of this application, the first device may be a device having a read and/or write function, a read/write device, a relay node device (for example, integrated access and backhaul (integrated access and backhaul, IAB)), a read apparatus, a scanner, a reader head, a communicator, a reader, an interpreter, or the like. A form of the first device may be a terminal, a base station, a device having a read/write function, or the like. The at least one device (for example, the second device) may be an answer-back device, an electronic tag, an RFID tag, a radio frequency tag, a transponder, a data carrier, a record medium, a radio frequency card, an internet of things device, or the like. Forms of the first device and the second device may be terminals, base stations, or devices having a read/write function. This is not specifically limited in this application.

It should be noted that the first random number is randomly generated by the second device; and the first random number may include the first prefix information and first suffix information; or the first random number includes first suffix information, that is, the first device receives remaining bits in the randomly generated random number except bits that match the first prefix information. This is not specifically limited in this application.

With reference to the first aspect, in some implementations of the first aspect, a quantity of bits of the first random number is set; or the first device sends first information to the at least one device, and the first information includes information about a quantity of bits of the first random number.

Optionally, the first information may be separately sent by the first device, or may be sent by including the first information in the first command. This is not specifically limited in this application.

In this implementation, a quantity of bits of the random number is determined, and the at least one device can generate the random number based on the quantity of bits and send the random number to the first device.

With reference to the first aspect, in some implementations of the first aspect, the at least one device further includes a third device, and before the first device determines, based on the first random number, that the second device accesses the first device, the method includes: The first device receives a second random number from the third device, where the second random number corresponds to the first prefix information. The first device performs bit collision detection on the first random number and the second random number, to determine a target collision bit i, where i is an integer greater than k and less than or equal to k+m, the first random number includes first suffix information, the second random number includes second suffix information, both the first suffix information and the second suffix information include m bits, and m is an integer greater than or equal to 1. The first device generates second prefix information and third prefix information based on the target collision bit i, where both the second prefix information and the third prefix information include i bits, and the second prefix information and the third prefix information include at least a part of the first prefix information. The first device sends a second command and a third command to the at least one device, where the second command is used by the at least one device to obtain the second prefix information, and the third command is used by the at least one device to obtain the third prefix information.

It should be noted that, because the second prefix information and the third prefix information include the at least the part of the first prefix information, the first random number corresponds to the second prefix information and the third prefix information. Correspondingly, the second random number also corresponds to the two pieces of prefix information.

In this implementation, the first device generates the two pieces of new prefix information based on the collision bit of the first random number and the second random number, resends an inventory command, and redetermines, based on the first random number, that the second device accesses the first device. In addition, the first device can replace complete prefix information with indication information, and this can reduce transmission overheads.

With reference to the first aspect, in some implementations of the first aspect, the at least one device further includes a third device, and that the first device determines, based on the first random number, that the second device accesses the first device includes: The first device receives a second random number from the third device, where the second random number corresponds to the first prefix information. The first device determines that the second random number is the same as the first random number, where the second random number corresponds to the first prefix information. The first device sends second information to the at least one device, where the second information indicates the at least one device to re-generate a random number. The first device receives a third random number from the second device, and receives a fourth random number from the third device. The first device determines, based on the third random number and the fourth random number, that the second device and the third device access the first device.

In this implementation, after detecting a collision bit, the first device determines that the first random number is the same as the second random number, indicates to re-generate and send the new random number, and then determines, based on the new random number, that the second device and the third device access the first device.

With reference to the first aspect, in some implementations of the first aspect, the at least one device further includes a third device, and that the first device determines, based on the first random number, that the third device accesses the first device includes: The first device determines that the second random number is the same as the first random number. The first device sends third information to the at least one device, where the third information indicates the at least one device to resend a random number. The first device receives the first random number from the second device in a first time unit, and receives the second random number from the third device in a second time unit, where the first time unit and the second time unit are time units randomly selected by the second device and the third device respectively for use, and each time unit may be triggered to be generated or generated by using a downlink command. The first device determines, based on the first time unit and the second time unit, that the second device and the third device access the first device.

In this implementation, after detecting a collision bit, the first device determines that the first random number is the same as the second random number, indicates the at least one device to separately send random numbers in different time units, and then determines, based on the first time unit and the second time unit, that the second device and the third device access the first device.

With reference to the first aspect, in some implementations of the first aspect, the at least one device further includes a third device, and before the first device determines, based on the first random number, that the second device accesses the first device, the method includes: The first device receives a second random number from the third device, where the second random number corresponds to the first prefix information. The first device generates fourth prefix information and fifth prefix information after determining that the first random number collides with the second random number, where the fourth prefix information and the fifth prefix information each include k+1 bits, and the fourth prefix information and the fifth prefix information include at least a part of the first prefix information. The first device sends a fourth command and a fifth command to the at least one device, where the fourth command is used by the at least one device to obtain the fourth prefix information, and the fifth command is used by the at least one device to obtain the fifth prefix information.

It should be noted that, because the fourth prefix information and the fifth prefix information include the at least the part of the first prefix information, the first random number corresponds to the fourth prefix information and the fifth prefix information. Correspondingly, the second random number also corresponds to the two pieces of prefix information. In this implementation, for a scenario in which a specific collision bit cannot be detected, the first device generates the two pieces of new prefix information, resends an inventory command, and then determines, based on the first random number, that the second device accesses the first device. In addition, the first device replaces complete prefix information with indication information, and this can reduce transmission overheads.

With reference to the first aspect, in some implementations of the first aspect, the at least one device further includes a third device, and that the first device determines, based on the first random number, that the second device accesses the first device includes: The first device receives a second random number from the third device, where the second random number corresponds to the first prefix information, the first random number includes first suffix information, the second random number includes second suffix information, both the first suffix information and the second suffix information include m bits, and m is an integer greater than or equal to 1. The first device sends fourth information to the at least one device after determining that the first random number collides with the second random number, where the fourth information indicates the at least one device to update p bits in suffix information in a random number, and p is an integer greater than or equal to 1 and less than or equal to m. The first device receives an updated first random number from the second device and an updated second random number from the third device, where the updated first random number includes updated first suffix information, and the updated second random number includes updated second suffix information. The first device determines, based on the updated first random number and the updated second random number, that the second device and the third device access the first device.

In this implementation, after determining that the first random number collides with the second random number, the first device can indicate the at least one device to update a random number, and further determine, based on the updated random number, that the at least one device accesses the first device.

It should be noted that, on the basis of this implementation, bit collision detection can still be performed to determine a target collision bit until it is determined that the at least one device accesses the first device. A specific implementation is similar to that in the foregoing manner. Details are not described herein again.

With reference to the first aspect, in some implementations of the first aspect, P is a quantity of bits at which the first random number collides with the second random number; and if consecutive collision occurs between the first random number and the second random number, the fourth information indicates a value of p; or if discrete collision occurs between the first random number and the second random number, the fourth information indicates a bit at which the first random number collides with the second random number.

Optionally, a value of p may alternatively be set. This is not specifically limited in this application.

In this implementation, detection of consecutive bit collision and discrete bit collision is combined to implement efficient inventory.

With reference to the first aspect, in some implementations of the first aspect, the at least one device further includes a third device, and that the first device receives a first random number from the second device includes: The first device receives first n bits of the first random number from the second device, and performs collision detection between the first n bits of the first random number and first n bits of a second random number from the third device, where n is an integer greater than or equal to 1 and less than k+m, the first random number includes first suffix information, the second random number includes second suffix information, both the first suffix information and the second suffix information include m bits, and m is an integer greater than or equal to 1. After determining that first s bits of the first random number do not collide with first s bits of the second random number, the first device sends fifth information to the at least one device, where s is a positive integer less than or equal to n, the fifth information indicates the at least one device to send first q bits of a random number, and q is an integer greater than n and less than k+m. The first device receives first q bits of the first random number from the second device, and performs collision detection on the first q bits of the first random number and first q bits of the second random number from the third device. After determining that first t bits of the first random number do not collide with first t bits of the second random number, the first device sends sixth information to the at least one device, where t is a positive integer greater than or equal to s and less than or equal to q, and the sixth information indicates the at least one device to send a random number generated according to the first command. The first device receives the first random number from the second device, and performs collision detection on the first random number and the second random number from the third device, where the first random number and the second random number include k+m bits. After determining that the first random number does not collide with the second random number, the first device determines that the second device and the third device access the first device.

It should be understood that, during bit collision detection, if bit collision between random numbers is detected, re-inventory can be performed in the foregoing possible implementation; or if bit collision is not detected, it may be considered that the second device and the third device have completed random access to the first device.

In this implementation, a segment identification method is used for a long tag. This can improve inventory efficiency, and reduce signaling transmission overheads.

With reference to the first aspect, in some implementations of the first aspect, the first command further indicates a value of n and/or a value of q.

Optionally, a value of n and/or a value of q may alternatively be set. This is not specifically limited in this application.

In this implementation, the quantity of bits of the random number fed back by the third device each time is indicated. This can reduce an inventory delay, and improve random access efficiency.

It should be noted that, in embodiments of this application, random number detection can be performed a plurality of times until it is determined that the at least one device completes random access. For a specific implementation of bit collision detection, refer to the foregoing possible implementations. This is not specifically limited in this application.

According to a second aspect, an identification method is provided. The method may be performed by at least one device (for example, a second device or a tag), or may be performed by a chip or a circuit used in the at least one device (for example, the second device). This is not limited in this application.

The method includes: The second device receives a first command from a first device, where the second device is one of at least one device, the first command is used by the at least one device to obtain first prefix information, the first prefix information includes k bits, and k is an integer greater than or equal to 1. The second device generates a first random number according to the first command, where the first random number corresponds to the first prefix information. The second device sends the first random number to the first device.

According to the solution provided in this application, the second device generates and sends the first random number after receiving the first command and matching the first prefix information. A random number is used to replace a complete identifier of the second device for inventory. This provides a random access manner of the second device

With reference to the second aspect, in some implementations of the second aspect, a quantity of bits of the first random number is set; or the third device receives first information from the first device, where the first information includes information about a quantity of bits of the first random number, and the third device determines the quantity of bits of the first random number based on the first information.

In this implementation, a quantity of bits of a random number is determined, and the second device can generate the random number based on the quantity of bits.

With reference to the second aspect, in some implementations of the second aspect, the at least one device further includes a third device, a second random number generated by the third device according to the first command corresponds to the first prefix information, and after the second device sends the first random number to the first device, the method includes: The second device receives a second command and a third command from the first device, where the second command is used by the at least one device to obtain second prefix information, the third command is used by the at least one device to obtain third prefix information, the second prefix information and the third prefix information are determined based on a target collision bit i, the target collision bit i is determined based on bit collision detection of the first random number and the second random number, both the second prefix information and the third prefix information include i bits, the second prefix information and the third prefix information include at least a part of the first prefix information, and i is an integer greater than k and less than or equal to k+m. The second device resends the first random number to the first device according to the second command.

In this implementation, the first device generates the two pieces of new prefix information based on the specific collision bit of the first random number and the second random number, resends an inventory command, and redetermines, based on the first random number, that the second device accesses the first device. In addition, the first device can replace complete prefix information with indication information, and this can reduce transmission overheads.

With reference to the second aspect, in some implementations of the second aspect, the at least one device further includes a third device, a second random number generated by the third device according to the first command corresponds to the first prefix information, and after the second device sends the first random number to the first device, the method includes: When the first random number is the same as the second random number, the second device receives second information from the first device, where the second information indicates the at least one device to re-generate a random number. The second device generates a third random number based on the second information, where the third random number corresponds to the first prefix information. The second device sends the third random number to the first device.

In this implementation, after determining, when detecting collision bits, that a plurality of random numbers are the same, the first device indicates the at least one device to re-generate and send a random number, and then determines, based on the updated random number, that the at least one device accesses the first device.

With reference to the second aspect, in some implementations of the second aspect, the at least one device further includes a third device, a second random number generated by the third device according to the first command corresponds to the first prefix information, and after the second device sends the first random number to the first device, the method further includes: When the first random number is the same as the second random number, the second device receives third information from the first device, where the third information indicates the at least one device to resend a random number. The second device sends the first random number in a first time unit based on the third information, where the first time unit is a time unit randomly selected by the second device for use, and each time unit may be triggered to be generated or generated by using a downlink command.

In this implementation, after determining, when detecting collision bits, that a plurality of random numbers are the same, the first device indicates the at least one device to send random numbers in different time units, and then determines, based on the random numbers received in the different time units, that the at least one device accesses the first device.

With reference to the second aspect, in some implementations of the second aspect, the at least one device further includes a third device, a second random number generated by the third device according to the first command corresponds to the first prefix information, and after the second device sends the first random number to the first device, the method includes: After the first random number collides with the second random number, the second device receives a fourth command and a fifth command from the first device, where the fourth command is used by the at least one device to obtain fourth prefix information, the fifth command is used by the at least one device to obtain fifth prefix information, the fourth prefix information and the fifth prefix information are determined based on bit collision detection of the first random number and the second random number, the fourth prefix information and the fifth prefix information each include k+1 bits, and the fourth prefix information and the fifth prefix information include at least a part of the first prefix information. The second device resends the first random number to the first device according to the fourth command.

In this implementation, for a scenario in which a specific collision bit cannot be detected, the first device generates the two pieces of new prefix information, resends an inventory command, and then determines, based on the first random number, that the second device accesses the first device. In addition, the first device can replace complete prefix information with indication information, and this can reduce transmission overheads.

With reference to the second aspect, in some implementations of the second aspect, the at least one device further includes a third device, a second random number generated by the third device according to the first command corresponds to the first prefix information, and after the second device sends the first random number to the first device, the method includes: After the first random number collides with the second random number, the second device receives fourth information from the first device, where the fourth information indicates the at least one device to update p bits in suffix information in a random number, the first random number includes first suffix information, the first suffix information includes m bits, m is an integer greater than or equal to 1, and p is an integer greater than or equal to 1 and less than or equal to m. The second device updates p bits in the first suffix information in the first random number based on the fourth information. The second device sends an updated first random number to the first device.

In this implementation, after determining that a plurality of random numbers collide, the first device can indicate the at least one device to update a random number, and further determine, based on an updated random number, that the at least one device accesses the first device.

With reference to the second aspect, in some implementations of the second aspect, P is a quantity of bits at which the first random number collides with the second random number; and if consecutive collision occurs between the first random number and the second random number, the fourth information indicates a value of p; or if discrete collision occurs between the first random number and the second random number, the fourth information indicates a bit at which the first random number collides with the second random number.

In this implementation, detection of consecutive bit collision and discrete bit collision is combined to implement efficient inventory.

With reference to the second aspect, in some implementations of the second aspect, the at least one device further includes a third device, a second random number generated by the third device according to the first command corresponds to the first prefix information, and that the second device sends the first random number to the first device includes: The second device sends first n bits of the first random number to the first device, where n is an integer greater than or equal to 1 and less than k+m, the first random number includes first suffix information, the first suffix information includes m bits, and m is an integer greater than or equal to 1. After first s bits of the first random number do not collide with first s bits of the second random number, the second device receives fifth information from the first device, where s is a positive integer less than or equal to n, the fifth information indicates the at least one device to send first q bits of a random number, and q is an integer greater than n and less than k+m. The second device sends first q bits of the first random number to the first device based on the fifth information. When first t bits of the first random number do not collide with first t bits of the second random number, the second device receives sixth information from the first device, where t is a positive integer greater than or equal to s and less than or equal to q, the sixth information indicates the at least one device to send a random number generated according to the first command. The second device sends the first random number to the first device based on the sixth information.

In this implementation, a segment identification method can be used for a long tag. This can improve inventory efficiency, and reduce signaling transmission overheads.

With reference to the second aspect, in some implementations of the second aspect, the first command further indicates a value of n and/or a value of q.

In this implementation, the quantity of bits of the random number fed back by the second device each time is indicated. This can reduce an inventory delay, and improve random access efficiency.

According to a third aspect, an identification apparatus is provided, and includes: a transceiver unit, configured to send, by a first device, a first command to at least one device, where the at least one device includes a second device, the first command is used by the at least one device to obtain first prefix information, the first prefix information includes k bits, k is an integer greater than or equal to 1; and the transceiver unit is further configured to receive, by the first device, a first random number from the second device, and the first random number corresponds to the first prefix information; and a transceiver unit, configured to determine, by the first device based on the first random number, that the second device accesses the first device.

The transceiver unit may perform receiving and sending processing in the first aspect, and the processing unit may perform processing other than receiving and sending in the first aspect.

According to a fourth aspect, an identification apparatus is provided, and includes: a transceiver unit, configured to receive, by a second device, a first command from a first device, where the second device is one of at least one device, the first command is used by the at least one device to obtain first prefix information, the first prefix information includes k bits, and k is an integer greater than or equal to 1; and a processing unit, configured to generate, by the second device, a first random number according to the first command, where the first random number corresponds to the first prefix information; and the transceiver unit is further configured to send, by the second device, the first random number to the first device.

The transceiver unit may perform receiving and sending processing in the second aspect, and the processing unit may perform processing other than receiving and sending in the second aspect.

According to a fifth aspect, a first device is provided, includes a processor, and optionally, further includes a memory. The processor is configured to control a transceiver to receive and send signals, the memory is configured to store a computer program, and the processor is configured to invoke the computer program from the memory and run the computer program, so that the first device performs the method in any one of the first aspect or the possible implementations of the first aspect.

Optionally, there are one or more processors, and there are one or more memories.

Optionally, the memory may be integrated with the processor, or the memory and the processor are separately disposed.

Optionally, the first device further includes a transceiver. The transceiver may be specifically a transmitting machine (transmitter) and a receiving machine (receiver).

According to a sixth aspect, at least one device (for example, a second device) is provided, includes a processor, and optionally, further includes a memory. The processor is configured to control a transceiver to receive and send signals, the memory is configured to store a computer program, and the processor is configured to invoke the computer program from the memory and run the computer program, so that the second device performs the method in any one of the second aspect or the possible implementations of the second aspect.

Optionally, there are one or more processors, and there are one or more memories.

Optionally, the memory may be integrated with the processor, or the memory and the processor are separately disposed.

Optionally, the second device further includes a transceiver. The transceiver may be specifically a transmitting machine (transmitter) and a receiving machine (receiver).

According to a seventh aspect, a communication system is provided, and includes: a first device, configured to perform the method in any one of the first aspect or the possible implementations of the first aspect; and a second device, configured to perform the method in any one of the second aspect or the possible implementations of the second aspect.

According to an eighth aspect, a computer-readable storage medium is provided. The computer-readable storage medium stores a computer program or code, and when the computer program or code is run on a computer, the computer is enabled to perform the method in any one of the first aspect or the possible implementations of the first aspect, or the computer is enabled to perform the method in any one of the second aspect or the possible implementations of the second aspect.

According to a ninth aspect, a chip is provided, and includes at least one processor. The at least one processor is coupled to a memory, the memory is configured to store a computer program, and the processor is configured to invoke the computer program from the memory and run the computer program, so that a first device in which the chip system is installed performs the method in any one of the first aspect or the possible implementations of the first aspect, and a second device in which a chip system is installed performs the method in any one of the second aspect or the possible implementations of the second aspect.

The chip may include an input circuit or interface configured to send information or data, and an output circuit or interface configured to receive information or data.

According to a tenth aspect, a computer program product is provided. The computer program product includes computer program code, and when the computer program code is run by a first device, the method in any one of the first aspect or the possible implementations of the first aspect is performed; and when the computer program code is run by a second device, the method in any one of the second aspect or the possible implementations of the second aspect is performed.

### BRIEF DESCRIPTION OF DRAWINGS

FIG. 1 is a diagram of an example of a communication system to which this application is applicable;
FIG. 2 is a diagram of examples of deployment manners of a tag and a reader/writer in a communication system to which this application is applicable;
FIG. 3 is a diagram of an example of Manchester coding to which this application is applicable;
FIG. 4 is a diagram of an example of an inventory procedure of a passive tag to which this application is applicable;
FIG. 5 is a diagram of an example of a collision tree-based inventory method to which this application is applicable;
FIG. 6 is a diagram of an example of a multi-bit collision tree-based inventory method to which this application is applicable;
FIG. 7 is a diagram of an example of an identification method to which this application is applicable;
FIG. 8 is a diagram of an example of a tag identification method to which this application is applicable;
FIG. 9 is a diagram of another example of a tag identification method to which this application is applicable;
FIG. 10 is a diagram of still another example of a tag identification method to which this application is applicable;
FIG. 11(a) to FIG. 11(c) are a diagram of an example of a multi-bit collision tree-based inventory procedure to which this application is applicable;
FIG. 12 is a diagram of still another example of a tag identification method to which this application is applicable;
FIG. 13 is a diagram of an example of a multi-bit collision tree-based inventory procedure to which this application is applicable;
FIG. 14 is a diagram of an example of an identification apparatus to which this application is applicable; and
FIG. 15 is a diagram of another example of an identification apparatus to which this application is applicable.

### DESCRIPTION OF EMBODIMENTS

The following describes technical solutions of this application with reference to accompanying drawings.

The technical solutions in embodiments of this application are applied to various communication systems, for example: a long term evolution (long term evolution, LTE) system, an LTE frequency division duplex (frequency division duplex, FDD) system, LTE time division duplex (time division duplex, TDD), a worldwide interoperability for microwave access (worldwide interoperability for microwave access, WiMAX) communication system, a 5th generation (5th generation, 5G) communication system or a future communication system, for example, a 6th generation (6th generation, 6G) communication system, and vehicle-to-x (vehicle-to-x, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), long term evolution-vehicle (long term evolution-vehicle, LTE-V), internet of vehicles, machine type communication (machine type communication, MTC), internet of things (internet of things, IoT), long term evolution-machine (long term evolution-machine, LTE-M), machine to machine (machine to machine M2M).

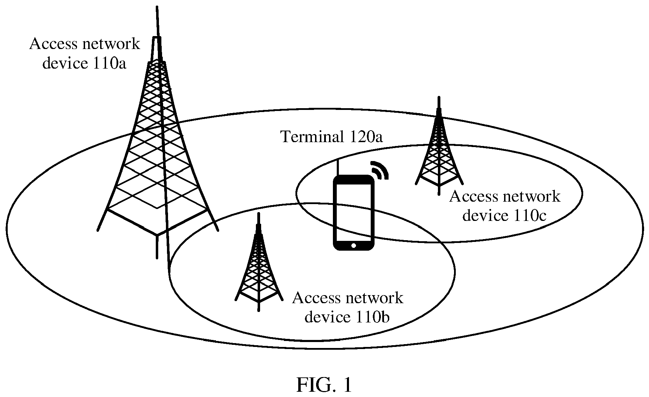

FIG. 1 is a diagram of an architecture of a communication system to which an embodiment of this application is applicable. As shown in FIG. 1, the communication system includes at least one access network device (for example, 110a, 110b, and 110c in FIG. 1), and may further include at least one terminal (for example, 120a in FIG. 1). The terminal is located within coverage of one or more cells (carriers) provided by the access network device. The access network device in FIG. 1 may be a base station (base station), an evolved NodeB (evolved NodeB, eNodeB), a transmission reception point (transmission reception point, TRP), a radio network controller (radio network controller, RNC), a base station controller (base station controller, BSC), a base station in a future mobile communication system, an access node in a Wi-Fi system, or the like. The access network device may be a macro base station (for example, 110a in FIG. 1), or may be a micro base station, a small cell, a pole site, an indoor station, or the like (for example, 110b and 110c in FIG. 1), or may be a relay node, a donor node, or the like. A specific technology and a specific device form that are used by the access network device are not limited in embodiments of this application.

In FIG. 1, the terminal may be a device that provides voice and/or data connectivity for a user, and the terminal may perform air interface communication with a network device through an uplink (uplink, UL) or a downlink (downlink, DL). The terminal may be referred to as a terminal device, user equipment (user equipment, UE), a mobile station, a mobile terminal, or the like. A specific technology and a specific device form that are used by the terminal are not limited in embodiments of this application. The terminal may be located within cell coverage of the network device.

In embodiments of this application, a function of the network device may alternatively be performed by a module (for example, a chip) in the network device, or may be performed by a control subsystem including the function of the network device. The control subsystem including the function of the network device may be a control center in the foregoing terminal application scenarios such as a smart grid, industrial control, intelligent transportation, and a smart city. A function of the terminal may be performed by a module (for example, a chip or a modem) in the terminal, or may be performed by an apparatus including the function of the terminal.

It should be understood that FIG. 1 is merely a diagram of the communication system to which this embodiment of this application is applicable. This is not specifically limited in this application.

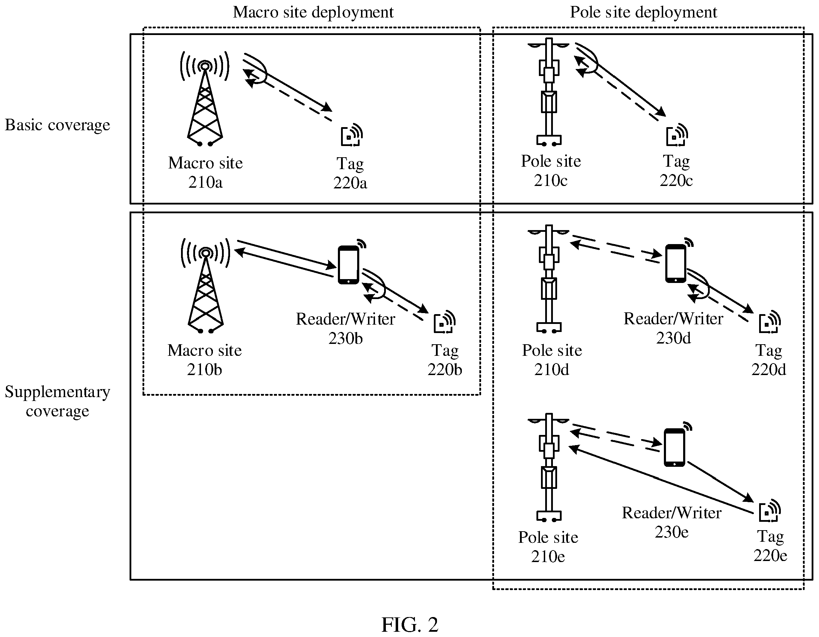

FIG. 2 is a diagram of examples of deployment manners of a tag and a reader/writer in a communication system. As shown in FIG. 2, for the deployment manners of the tag and the reader/writer in the communication system, a basic coverage scenario and a supplementary coverage scenario may be included.

In the basic coverage scenario, the reader/writer may be deployed as an access network device in the communication system or deployed together with an access network device, and the access network device may read information in the tag and/or write information into the tag. For example, a macro site 210a may read information in a tag 220a and/or write information into the tag 220a. For another example, a pole site 210c may read information in a tag 220c and/or write information into the tag 220c. Alternatively, the reader/writer may be deployed as a terminal in the communication system or deployed together with a terminal. For example, the reader/writer is deployed together with a pole site 210c as a terminal, and 210c may read information in a tag 220c and/or write information into the tag 220c.

In the supplementary coverage scenario, the reader/writer may be deployed in the communication system as a terminal. Data reading is performed between the reader/writer and an access network device through an (UE-UTRAN, uu) interface, namely, air interface transmission, and sidelink communication may be performed between the reader/writer and the tag. For example, a macro site 210b may communicate with a reader/writer 230b through a uu interface, and the reader/writer 230b may read information in a tag 220b and/or write information into the tag 220b. For another example, a pole site 210d may communicate with a reader/writer 230d through a uu interface, and the reader/writer 230d may read information in a tag 220d and/or write information into the tag 220d. For still another example, a pole site 210e may communicate with a reader/writer 230e through a uu interface. The reader/writer 230e may read information in a tag 220e and/or write information into the tag 220e. If the tag 220e has an air interface communication capability, the tag 220e may also directly communicate with the pole site 210e.

It should be noted that the foregoing several provided deployment manners of the tag and the reader/writer in the communication system are merely examples for description, and should not constitute any limitation on the technical solutions of this application. For example, the reader/writer and the tag may be deployed in the communication system as terminals, and communication between the reader/writer and the tag may be considered as sidelink (sidelink) communication. For another example, the reader/writer may be deployed in the communication system as an access network device (for example, the reader/writer is integrated in the access network device or the access network device has a function of the reader/writer), and the tag may be deployed in the communication system as a terminal.

For ease of understanding, the following describes concepts related to this application.

### 1. RFID technology

An RFID technology is one of automatic identification technologies, and is for noncontact bidirectional data communication in a wireless radio frequency manner. The RFID technology can implement, in the wireless radio frequency manner, read/write of a reader/writer on tags, so as to identify a target and exchange data.

The radio frequency identification technology can be divided into three types: an active radio frequency identification technology, a passive radio frequency identification technology, and a semi-active radio frequency identification technology. Typical RFID application scenarios include an animal chip, an automobile chip anti-theft device, access control, parking lot control, production line automation, and material management.

A working principle of the passive RFID technology is as follows: After entering a magnetic field of a reader/writer, a tag may receive a radio frequency signal sent by the reader/writer, and send product information (for a passive tag or a passive tag (passive tag)) stored in a tag chip through energy obtained through an induction current, or actively send a signal of a specific frequency to send information (for an active tag or an active tag (active tag)) stored in the chip. The reader/writer reads the information from the tag, decodes the information, and sends the information to an information processing system for data processing.

### 2. RFID system

An RFID system may include tags (tags) and a reader/writer (reader).

The tag may be referred to as an answer-back device, an electronic tag, an RFID tag, a radio frequency tag, a transponder, a data carrier, a record medium, a radio frequency card, an internet of things device, or the like. For ease of description, these devices are uniformly referred to as tags in this application. Each tag has a unique electronic code, and can be attached to an object or a device to identify a target object. A high-capacity tag has writable storage space.

The radio frequency identification RFID technology can be divided into three types: an active radio frequency identification technology, a passive radio frequency identification technology, and a semi-active radio frequency identification technology. A passive tag may be referred to as a passive internet of things (passive IOT) device. Therefore, the tag may alternatively be considered as a terminal.

The reader/writer is a handheld or fixed device for reading and/or writing tag information, and may be referred to as a device having a read and/or write function, a read/write device, a read apparatus, a scanner, a reader head, a communicator, a reader, an interpreter, or the like, or may be understood as a device communicating with the tag, and may be in a form of a terminal, a base station, or a device having a read/write function. The reader/writer is a device that reads tag information and/or writes information into the tag. For ease of description, these devices are uniformly referred to as readers/writers in this application.

It should be understood that a typical radio frequency identification system generally includes one reader/writer and a plurality of tags. The tags are correspondingly pasted on different objects, so that the reader/writer can identify the objects in a work domain of the reader/writer.

### 3. Tag storage area

Generally, a tag storage area (tag memory) includes four independent storage area blocks: a reserved (RESERVED) area, an electronic product code (electronic product code, EPC) area, a tag identification number (TID) area, and a user (USER) area.

### (1) Reserved area

The reserved area is also referred to as a reserved storage area, and is used to store passwords for kill (a deactivation password) and access (an access password) functions. Storage addresses 00h to 1Fh are used to store the kill password, and storage addresses 20h to 3Fh are used to store the access password. A tag on which the kill and/or access password are not executed can be regarded as a zero-value password and is permanently read/write locked. The zero-value password does not need to be stored in a password storage area in the reserved area.

### (2) EPC area

The EPC area is also referred to as an EPC storage area, and is used to store an EPC number, or the like. Storage addresses 00h to 0Fh are used to store cyclic redundancy check-16 (cyclic redundancy check-16, CRC-16), storage addresses 10h to 1Fh are used to store a protocol control (protocol control, PC) bit, and a storage address 20h and storage addresses above 20h are used to store a code used to identify an object to which a tag is attached.

### (3) TID area

The TID area is also referred to as a TID storage area, and is used to store a tag identifier. Each TID number needs to be unique. Storage addresses 00h to 07h are used to store an 8-bit class identifier, and storage addresses above 07h should include sufficient identification information, so that a reader/writer can uniquely identify a customized command and/or an optional command supported by a tag.

### (4) User area

The user area is also referred to as a user storage area, and is used to store user-defined data. A storage organization structure of the user area can be defined by a user.

It should be noted that, a lock (lock) status bit of each block and the like are also storage units. For more detailed descriptions of the reserved area, the EPC area, the TID area, and the user area, refer to the conventional technology. Details are not described herein again.

### 4. Inventory

A tag receives mask information and a flag bit specified by a reader/writer. If tag storage area information matches the received mask information, and a flag bit stored in the tag is consistent with that indicated by the reader/writer, the tag may enter an inventory procedure, that is, initiate random access to the reader/writer and complete a corresponding instruction of the reader/writer.

### 5. Manchester coding (manchester coding)

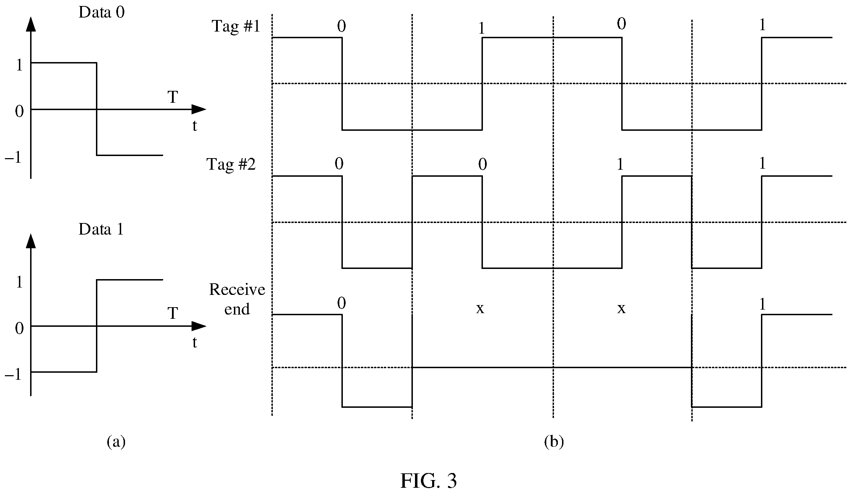

Manchester coding is also referred to as self-phasing code or phase encoding (phase encoding, PE), and can maintain synchronization between a sending device and a receiving device through signal changes. In Manchester coding, level changes indicate bits 0 and 1. FIG. 3 is a diagram of an example of Manchester coding to which this application is applicable. As shown in (a) in FIG. 3, a transition from a higher level to a lower level may represent a bit 0, and a transition from a lower level to a higher level may represent a bit 1. In an RFID system, Manchester coding can be performed on information sent by a tag.

It should be noted that bit collision detection in embodiments of this application may be Manchester coding, or may be another coding manner. This is not specifically limited in this application.

It should be understood that resolving, through coordination between a reader/writer and a tag, a collision caused by multiple access is referred to as anti-collision.

### 6. Collision

In an RFID system, there may be a plurality of tags. When the plurality of tags all make response, collision may occur, which may cause information loss. After the plurality of tags send transmission bits with different values, a receive side does not have a jump state, that is, collision occurs. As shown in (b) in FIG. 3, if both two tags (for example, a tag #1 and a tag #2) send information, Manchester coding is performed on the sent information. A transmission bit of the tag #1 is 0101, and a transmission bit of the tag #2 is 0011. In this case, collision occurs at a second bit and a third bit that are received by a receive end, and a bit at which collision occurs may be represented by "x".

With the rapid development of wireless communication, to meet and enrich increasing requirements of people, a 5th generation (fifth generation, 5G) mobile communication system emerges, and can effectively cope with an explosive growth of mobile data traffic in the future, and support massive device connections and various emerging new services.

Internet of things (internet of things, IoT), as a part of 5G, is growing rapidly in a market demand. Information and data are transmitted between machine-to-machine M2M over a wireless network, and this is an important direction of IoT development. An internet of things technology includes narrowband (narrowband) internet of things, reduced capacity (reduced capacity, RedCap) user equipment, and the like, and can implement microwatt-level power consumption and costs, but cannot further reduce power consumption. A passive RFID technology can implement microwatt-level power consumption and ultra-low costs, and therefore becomes an important branch of a future evolution technology of cellular technologies.

RFID can be used to trace and manage managed objects in many fields, features high accuracy, a long reading distance, a large storage data amount, and high durability, and therefore is widely used in steps such as product production, logistics, and sales. Based on an inventory procedure, after successful random access, a tag can send capability information of the tag to a reader/writer and complete a corresponding instruction of the reader/writer.

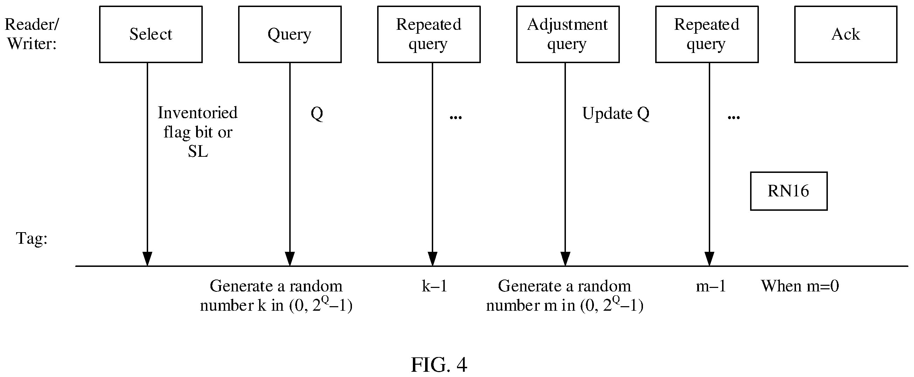

FIG. 4 is a diagram of an example of an inventory procedure of a passive tag to which this application is applicable. As shown in FIG. 4, the following specific implementation steps are mainly included.

### 1. Tag select process

A reader/writer sends select (select) signaling to select, by selecting a flag bit and mask information, a specific tag or tag group for inventory and access. Signaling select parameters include Target, Action, Membank, Pointer, Length, Mask, Truncate, and the like. For a specific meaning of each parameter, refer to a description in the RFID air interface protocol ISO 18000-6C.

Meanings of specific mask information are as follows.
(1) Membank indicates a memory area, and may indicate a tag storage area, namely, a reserved (RESERVED) area, an electronic product code (electronic product code, EPC) area, a tag identification number (TID) area, and a user (USER) area.
(2) EBV indicates information of a start address of a selected memory area.
(3) Length indicates a mask length.
(4) Mask indicates mask content.

### 2. Tag inventory process

Step (1): The read/write device broadcasts query (Query) signaling, where a parameter in the query signaling includes Q. There may be one or more tags within coverage of the reader/writer. Each tag within the coverage can receive the query signaling.

Step (2): The tag to be inventoried receives the query signaling sent by the read/write device. Based on the parameter Q, the tag selects a random number from a range of [0, 2^{Q}-1] and loads the random number into a slot calculator. For the tags within the coverage, if a tag with a non-zero value is selected, the tag is transferred to an arbitration state; or if a tag with a zero value is selected, the tag enters a response state.

Step (3): The tag that enters the response state sends a 16-bit random number (random number 16-bit, RN16)/pseudo-random number to the read/write device. Correspondingly, the read/write device receives the RN16 sent by the tag.

Step (4): The read/write device sends an acknowledgment (ACKnowledgement, ACK) command to the tag that enters the response state, where the ACK command includes the RN16 sent by the tag.

Step (5): A confirmed tag is transferred to a confirmed state, and sends PC, electronic product code (electronic product code, EPC), and cyclic redundancy check (cyclic redundancy check, CRC) (for example, CRC-16) to the read/write device, to complete the inventory process of basic information of the tag.

Step (6): The read/write device sends QueryRep signaling or QueryAdjust signaling. The QueryRep signaling is the foregoing repeatedly sent query signaling, and the parameter is not changed in the QueryRep signaling. The QueryAdjust signaling is the foregoing repeatedly sent query signaling, and a value of Q may be adjusted.

A value in the slot counter decreases by 1 each time the tag in the arbitration state receives QueryRep signaling. The tag whose value is decreased to 0 in the slot calculator repeats the foregoing same response process. Each time the tag in the arbitration state receives the QueryAdjust signaling, the tag re-selects, based on the value of Q, a random number in the range of [0, 2^{Q}-1] and loads the random number into the slot counter. In this case, the tag with the non-zero value is selected and transferred to the arbitration state, and the tag with the zero value is selected and enters the response state.

When an identified tag receives the QueryRep signaling or the QueryAdjust signaling, an inventoried flag of the tag is set to an inverse value (for example, from A→B or B→A), and the tag is transferred to a ready state, and the current round of inventory process ends.

In this implementation, system efficiency is up to 36.8%, but inventory efficiency is low.

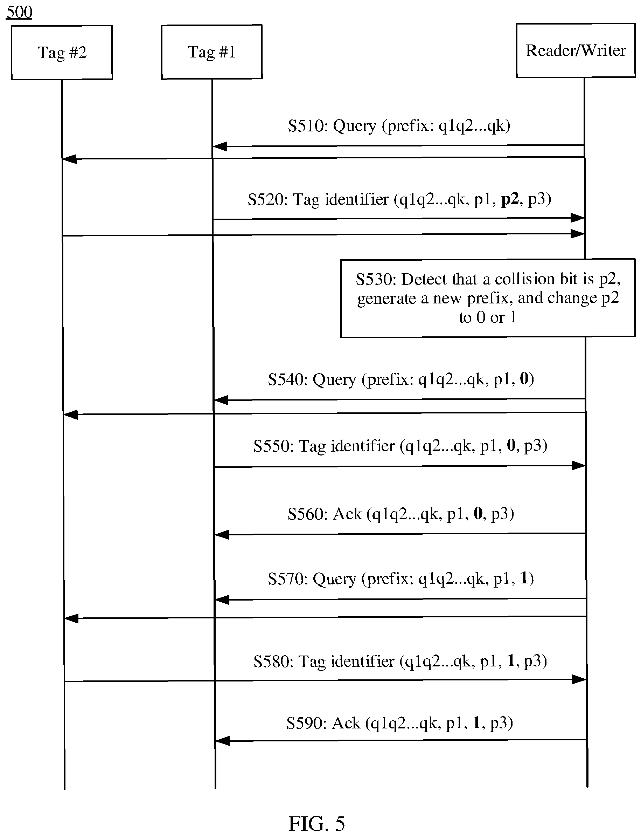

FIG. 5 is a diagram of an example of a collision tree (collision tree, CT)-based inventory method 500 to which this application is applicable. As shown in FIG. 5, the following steps are included.

S510: A reader/writer sends a query command (for example, Query) through broadcast.

Correspondingly, at least one tag receives the query command from the reader/writer.

The Query carries a prefix *q*1*q*2*...q*k, and k is an integer greater than or equal to 1 (for example, a binary bit).

It should be understood that there may be one or more tags within coverage of the reader/writer, and each tag within the coverage may receive the query signaling. For example, the at least one tag includes a tag #1 and a tag #2.

S520: After tags of the tag #1 and the tag #2 successfully match the prefix *q*1*q*2*...q*k, the tag #1 and the tag #2 feed back identifiers of the tags to the reader/writer.

For example, complete identifiers fed back by the tag #1 and the tag #2 are *qlq2...qk,* p1, p2, p3, for example, *qlq2...qk,* 110 and *qlq2...qk,* 101.

Optionally, the tag may feed back other bits except the prefix in the complete identifier to the reader/writer, for example, 110 and 101.

S530: The reader/writer determines, based on identifier information fed back by the tag #1 and the tag #2, that a first collision bit is pc, and generates two new prefixes, namely, *qlq2...qkplp2... pc-1* 0 and *qlq2...qkplp2... pc-1* 1.

For example, the reader/writer determines that a collision bit is p2, and generates two new prefixes: *q*1*q*2*...q*k*p*1 0 and *q*1*q*2*...q*k*p*1 1.

S540: The reader/writer resends a query command through broadcast.

The Query carries a prefix *qlq2...qkplp2... pc-1* 0 (for example, *qlq2...qk,* 1, 0).

S550: The tag #1 re-determines a matching status based on the prefix, and feeds back a tag identifier if the matching succeeds.

For example, the tag #1 matches the prefix *qlq2...qkplp2... pc-1* 0, and sends the tag identifier *qlq2...qk,* 1, 0, p3 to the reader/writer.

S560: The reader/writer feeds back an acknowledgment Ack message to the tag.

The Ack may carry tag identifier information *q*1*q*2*...qk, p*1*,* 0, p3.

S570: The reader/writer broadcasts a query command.

The Query carries a prefix *q*1*q*2*...q*k*p*1*p*2*... pc-*1 1 (for example, *qlq2...qk,* 1, 1).

S580: The tag #2 re-determines a matching status based on the prefix, and feeds back a tag identifier if the matching succeeds.

For example, the tag #2 matches the prefix *qlq2...qkplp2... pc-1* 1, and sends the tag identifier *qlq2...qk,* 1, 1, p3 to the reader/writer.

S590: The reader/writer feeds back an acknowledgment Ack message *q*1*q*2*...qk, p*1, 1, p3 to the tag.

The Ack may carry tag identifier information.

The foregoing steps are repeated between the reader/writer and the tag until the reader/writer identifies all the tags.

In this implementation, the tag feeds back the complete tag, that is, sends all bit information of the tag identifier information, where a feedback manner is fixed.

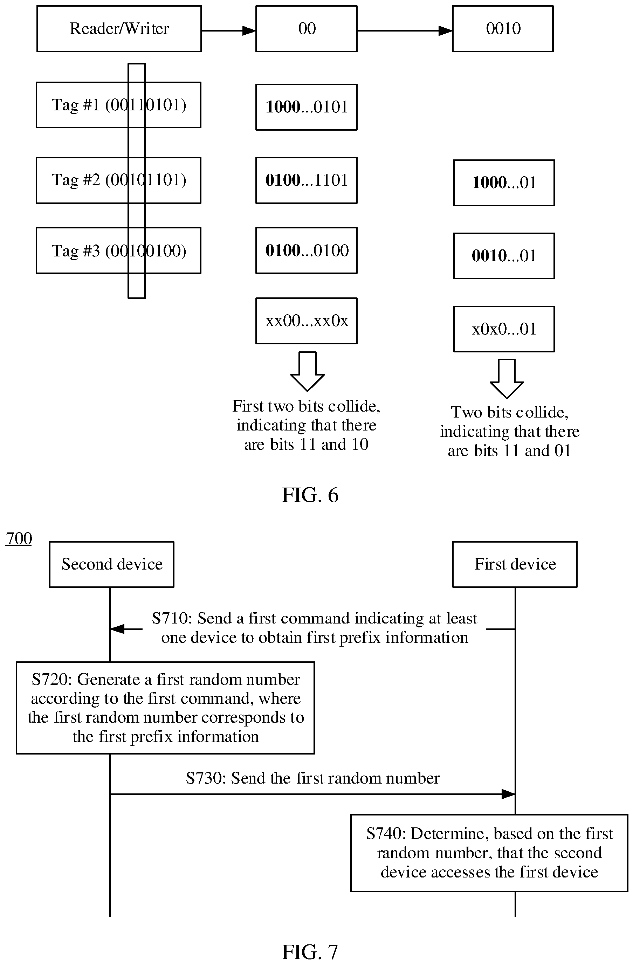

FIG. 6 is a diagram of an example of a multi-bit query tree (m-ary query tree, MQT)-based inventory method to which this application is applicable.

Specifically, a reader/writer sends an inventory command Query to a tag, where the Query carries a prefix *q*1*q*2*...q*k, and k is an integer greater than or equal to 1 (a binary bit). After the tag matches the prefix successfully, the tag feeds back other bits except the matching bit (prefix) to the reader/writer. The reader/writer performs bit collision detection based on a received bit, and determines a specific collision bit. Then, a new prefix is generated, and the foregoing process is repeated until identification of a plurality of tags is completed.

First 2 bits of the bits fed back by the tag are encoded by using a mapping table shown in Table 1 (mapping of 2 bits is used as an example). For example, a code corresponding to a bit 00 is 0001, a code corresponding to a bit 01 is 0010, a code corresponding to a bit 10 is 0100, and a code corresponding to a bit 11 is 1000.

**Table 1**

| 2 bits (bits) | 4 (=2²) bits (bits) |
|---|---|
| 00 | 0001 |
| 01 | 0010 |
| 10 | 0100 |
| 11 | 1000 |

As shown in Table 1, mapped data includes only one 1. An advantage of this encoding is that when the reader/writer receives the mapped data, collision information of the tag can be accurately detected. That is, when the reader/writer detects that collision coccus on a bit, a location of 1 is determined, and specific bit information of a corresponding bit string before encoding is known, without adding an additional user-defined command or introducing a vacant slot. This can further improve identification efficiency of a system.

It should be understood that Table 1 is merely an example for description, and should not constitute any limitation on the technical solutions of this application. For example, in this implementation, mapping of 3 bits may also be used as an example, and a corresponding mapping table includes eight mapping cases. This is not specifically limited in this application.

For example, a transmission bit of a tag #1 is 00110101, a transmission bit of a tag #2 is 00101101, and a transmission bit of a tag #3 is 00100100. In an example in which detection is performed every 2 bits, specific bits at which the three tags collide are bits 11 and 10. In this case, after the mapping is performed by using Table 1, bits fed back by the tag #1 are 1000...0101, bits fed back by the tag #2 are 0100... 1100, and bits fed back by the tag #3 are 0100... 0100. Therefore, the reader/writer can identify the tag #1 based on the feedback bits, and continue to repeat the foregoing steps on the tag #2 and the tag #3 until identification is completed. That is, in the example in which detection is performed every 2 bits, and specific bits at which the tag #2 collides with the tag #3 are bits 11 and 01. In this case, after the mapping is performed by using Table 1, bits fed back by the tag #2 are 1000...01, and bits fed back by the tag #3 are 0010...01. Therefore, the reader/writer can identify the tag #2 and the tag #3 based on the feedback bits.

In this implementation, the tag needs to re-encode first n bits of remaining bits each time, and this part of encoding may include a part that has been identified, causing a part of unnecessary power consumption. Therefore, efficiency needs to be improved.

In conclusion, the current inventory method has low efficiency of random access of the tag and high overheads, and results in poor performance of subsequent data transmission. Therefore, when a passive RFID or passive IoT technology is introduced to a cellular network, how to implement inventory or random access of a tag is a technical problem that needs to be urgently resolved.

In view of this, embodiments of this application provide an identification method and apparatus. A random number is used to replace a complete identifier for inventory. This can identify a device, and implement inventory and random access of the device.

For ease of understanding embodiments of this application, the following points are described.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" generally represents an "or" relationship between associated objects. "At least one of the following items (pieces)" or a similar expression thereof refers to any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.

In embodiments of this application, "first", "second", and various numbers are used for differentiation for ease of description, and are not used to limit the scope of embodiments of this application. For example, the terms are used to differentiate between different indication information.

In embodiments of this application, "read", "identify", "inventory", or "query" may be used alternatively.

In embodiments of this application, protocol definition may be implemented by prestoring corresponding code, a table, or another manner that can indicate related information in devices (for example, an initiating device and a response device). A specific implementation is not limited in this application.

A "protocol" in embodiments of this application may be a standard protocol in the communication field, for example, may include an LTE protocol, an NR protocol, a WLAN protocol, and a related protocol applied to a future communication system. This is not limited in this application.

In embodiments of this application, descriptions such as "when...", "in a case of...", and "if" all mean that a device performs corresponding processing in an objective case, and are not limited to time, and the device is not required to perform a determining action during implementation. This does not mean that there is another limitation.

In embodiments of this application, "being used to indicate" may include "being used to directly indicate" and "being used to indirectly indicate". When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The technical solutions provided in this application are described in detail below with reference to the accompanying drawings.

FIG. 7 is a diagram of an example of an identification method 700 to which a technical solution of this application is applicable. The method may be implemented by a first device and a second device, or may be implemented by a module or unit (for example, a chip, a circuit, or a system-on-a-chip (system on chip, SOC)) in the first device and the second device. The following specific implementation steps are included.

S710: The first device sends a first command to at least one device.

Correspondingly, the at least one device receives the first command from the first device.

The first command is used by the at least one device to obtain first prefix information, the first prefix information includes k bits, and k is an integer greater than or equal to 1.

In other words, the first command (for example, Query) may directly include the first prefix information, or the first command includes indication information, where the indication information indicates the first prefix information. The second device may directly or simply obtain the first prefix information according to the first command. For example, the first prefix information is *qlq2...qk.*

For example, the at least one device includes the second device, that is, the first device sends the first command to the second device. Correspondingly, the second device receives the first command from the first device.

It should be understood that a manner in which the first device sends the first command may be broadcast. This is not specifically limited in this application.

In embodiments of this application, the first device may be a device having a read and/or write function, a read/write device, a relay node device (for example, integrated access and backhaul (integrated access and backhaul, IAB)), a read apparatus, a scanner, a reader head, a communicator, a reader, an interpreter, or the like. A form of the first device may be a terminal, a base station, a device having a read/write function, or the like. The at least one device (for example, the second device) may be an answer-back device, an electronic tag, an RFID tag, a radio frequency tag, a transponder, a data carrier, a record medium, a radio frequency card, an internet of things device, or the like. Forms of the first device and the second device may be terminals, base stations, or devices having a read/write function. This is not specifically limited in this application.

S720: The second device generates a first random number according to the first command.

The first random number corresponds to the first prefix information.

It should be noted that the first random number is randomly generated by the second device; and the first random number may include the first prefix information and first suffix information, that is, the first device receives a complete random number; or the first random number may further include first suffix information, that is, the first device receives remaining bits in the randomly generated random number except bits that match the first prefix information. This is not specifically limited in this application.

That is, regardless of whether the first random number includes the first suffix information or includes the first prefix information and the first suffix information, the first random number may match the first prefix information.

For example, the first suffix information includes m bits, and m is an integer greater than or equal to 1. For example, the first random number may be *q*1*q*2*...q*k *p*1 p2... pm, for example, *q*1*q*2*...q*k *p*1 1 0 1 0... pm.

In a possible implementation, a quantity of bits of the first random number is set.

In another possible implementation, the first device sends first information to the at least one device. Correspondingly, the second device receives the first information from the first device, and may determine a quantity of bits of the first random number based on the first information. The first information includes information about the quantity of bits of the first random number.

It should be understood that the first information may be separately sent by the first device, or may be sent by including the first information in the first command. This is not specifically limited in this application.

For example, the first information may explicitly indicate the quantity of bits of the first random number. For example, the quantity of bits, of the first random number, included in the first information is 16.

Optionally, the first information may indicate the quantity of bits of the first random number. This is not specifically limited in this application.

For example, if it is determined that the quantity of bits of the first random number is 16, and a quantity of bits of the first prefix information is 8, a quantity of bits of the first suffix information is 8. For example, if the first prefix information is 01011001, the first suffix information may be 10101010.

It should be understood that the foregoing is merely an example for description, and does not constitute any limitation on the first random number.

It should be noted that, in embodiments of this application, the quantity of bits of the first random number fed back by the second device may be less than a quantity of bits of a complete identifier of the second device. Feeding back a random number instead of feeding back complete identifier information can reduce an inventory delay and transmission signaling overheads, and improve random access efficiency of the second device.

In this implementation, the quantity of bits of the random number is determined, and the second device can generate the first random number based on the quantity of bits.

S730: The second device sends the first random number to the first device.

Correspondingly, the first device receives the first random number from the second device.

For example, if it is determined that the quantity of bits of the first prefix information is 8, and the quantity of bits of the first suffix information is 8, the quantity of bits of the first random number sent by the second device may be 16, that is, the first device receives the complete random number, or the quantity of bits of the first random number may be 8, that is, the first device receives the remaining bits in the first random number except the bits that match the first prefix information, namely, the first suffix information. For example, when the first prefix information is 01011001, and the first suffix information is 10101010, the first random number sent by the second device may be 0101100110101010, or may be 10101010.

In a possible implementation, the at least one device further includes a third device, and the manner includes: The second device sends first n bits of the first random number to the first device. Correspondingly, the first device receives the first n bits of the first random number from the second device, where n is an integer greater than or equal to 1 and less than k+m, the first random number includes the first suffix information, a second random number generated by the third device according to the first command includes second suffix information, both the first suffix information and the second suffix information includes m bits, and m is an integer greater than or equal to 1. After determining that first s bits of the first random number do not collide with first s bits of the second random number from the third device, the first device sends fifth information to the at least one device, where s is a positive integer less than or equal to n. Correspondingly, the at least one device (for example, the second device) receives the fifth information from the first device, the fifth information indicates the at least one device to send first q bits of a random number, and q is an integer greater than n and less than k+m. The second device sends first q bits of the first random number to the first device based on the fifth information. Correspondingly, the first device receives the first q bits of the first random number from the second device. After determining that first t bits of the first random number do not collide with first t bits of the second random number from the third device, the first device sends sixth information to at least one device, where t is a positive integer greater than or equal to s and less than or equal to q. Correspondingly, the at least one device (for example, the second device) receives the sixth information from the first device, where the sixth information indicates the at least one device to send a random number generated according to the first command. The second device sends the first random number to the first device based on the sixth information. Correspondingly, the first device receives the first random number from the second device, where the first random number and the second random number include k+m bits.

Optionally, the first device sends indication information to the at least one device, where the indication information indicates a random number or identifier information of first n bits (or first q bits). Correspondingly, the second device receives the indication information from the first device, and makes corresponding feedback. For example, a quantity of bits of a random number is set to 16 bits, the first prefix information is 0101, and the random number randomly generated by the second device is 0101101011111111. If the indication information indicates the random number of first 6 bits, after matching a prefix, the second device may send the first 6 bits of the complete random number to the second device, for example, 010110, or first 6 bits of remaining bits after bits that match the prefix information, for example, 101011.

It should be noted that, when the first device completes or is about to complete identification of the random number of the first n bits (or the first q bits) fed back by the second device, the first device may further indicate the second device to feed back more bit information about the first random number.

In other words, the first device may send the fifth information to the second device when collision detection on first n bits of the first random number and first n bits of the second random number is completed and no bit collision occurs; or may synchronously send the fifth information to the second device when collision detection on first n bits of the first random number and first n bits of the second random number is not completed (for example, when collision detection on an s^{th} bit of the first random number and an s^{th} bit of the second random number is performed). This is not specifically limited in this application.

In this implementation, the first n bits may be first n bits of the complete first random number (namely, the first prefix information and the second prefix information); or the first n bits may be first n bits of remaining bits after the bits that match the first prefix information in the first random number, that is, first n bits of the first suffix information. Similarly, the first q bits may be first q bits of the complete first random number (namely, the first prefix information and the second prefix information), or may be first q bits of the first suffix information. This is not specifically limited in this application.

In a possible implementation, the first command further indicates a value of n and/or a value of q.

Optionally, a value of n and/or a value of q may alternatively be set. This is not specifically limited in this application.

In other words, the quantity of bits of the random number fed back by the second device each time may be preset, or may be indicated by the first device.

In addition, when the first device does not repeatedly indicate the quantity of bits fed back in the random number, the second device may continue to use previously received bit information for configuring reporting of a random number. In addition, a quantity of bits fed back by the second device each time may be the same, or may be different. This is not specifically limited in this application.

It should be noted that in the provided possible implementations, based on a case in which there is no bit collision between a plurality of random numbers, the first device further indicates a quantity of bits of a random number sent by the at least one device, which is merely an example for description, and should not constitute any limitation on the technical solutions of this application.

It should be further noted that the provided manner of segment-based feedback and identification of bit information of a random number is applicable to all bits of the first prefix information and the first suffix information, and is also applicable to bits of the first suffix information. That is, if the first random number includes the first prefix information and the first suffix information, the value of n and/or the value of q may correspond to all bit information of the first prefix information and the first suffix information; or if the first random number includes the first suffix information, the value of n and/or the value of q may correspond to all bit information of the first suffix information.

In this implementation, the quantity of bits of the random number fed back by the second device each time is indicated. This can reduce an inventory delay of each time, and improve random access efficiency.

For example, it is assumed that the first random number fed back by the second device is 0101100110101010. If the value of n is 8, the second device feeds back 8 bits 01011001 of the first random number for the first time. If the value of q is 12, the second device continues to feed back 12 bits 010110011010 of the first random number. Finally, the second device feeds back the complete first random number 0101100110101010 based on the sixth information until the second device successfully accesses the first device.

Optionally, values of n and q may change in an entire inventory process. To be specific, the first device may re-indicate the value of n and/or the value of q when sending an inventory command. This is not specifically limited in this application.

It should be understood that the foregoing is merely an example for description, and does not constitute any limitation on the first random number.

S740: The first device determines, based on the first random number, that the second device accesses the first device.

In a possible implementation, the at least one device further includes a third device, and before the first device determines, based on the first random number, that the second device accesses the first device, the manner includes: The third device sends a second random number to the first device. Correspondingly, the first device receives the second random number from the third device, where the second random number corresponds to the first prefix information. The first device performs bit collision detection on the first random number and the second random number, to determine a target collision bit i, where i is an integer greater than k and less than or equal to k+m, the first random number includes first suffix information, the second random number includes second suffix information, both the first suffix information and the second suffix information include m bits, and m is an integer greater than or equal to 1. The first device generates second prefix information and third prefix information based on the target collision bit i, where both the second prefix information and the third prefix information include i bits, and the second prefix information and the third prefix information include at least a part of the first prefix information. The first device sends a second command and a third command to the at least one device. Correspondingly, the at least one device (for example, the second device) receives the second command and the third command from the first device, where the second command is used by the at least one device to obtain the second prefix information, and the third command is used by the at least one device to obtain the third prefix information. The second device sends the first random number to the first device according to the second command. Correspondingly, the first device receives the first random number from the second device, and determines, based on the first random number, that the second device accesses the first device.

It should be noted that, because the second prefix information and the third prefix information include the at least the part of the first prefix information, the first random number corresponds to the second prefix information and the third prefix information. Correspondingly, the second random number also corresponds to the two pieces of prefix information.

For example, the first prefix information is *qlq2...qk.* Correspondingly, the first random number fed back by the second device is *q*1*q*2*...q*k *p*1 0 10, and the second random number fed back by the third device is *q*1*q*2*...q*k*p*1 1 1 1. After performing bit collision detection on the first random number and the second random number, the first device may determine that a first specific collision bit is p2. In this case, the second prefix information and the third prefix information that are re-generated by the first device based on the collision bit may be *q*1*q*2*...q*k*p*1 0 and *q*1*q*2*...q*k*p* 1 1, and the second prefix information and the third prefix information are carried in the sent second command and third command respectively. Correspondingly, after obtaining the second prefix information when receiving the second command, the second device can successfully match the second prefix information, and send the first random number to the first device. After receiving the second command, the third device does not feed back the second random number because matching the second prefix information fails. In this case, the first device can identify the second device without a conflict, that is, determine that the second device succeeds in random access. Similarly, after obtaining the third prefix information when receiving the third command, the third device can successfully match the third prefix information, and send the second random number to the first device. After receiving the third command, the second device does not feed back the first random number because matching the third prefix information fails. In this case, the first device can identify the third device without a conflict, that is, determine that the third device succeeds in random access.

For example, the first device may include the second prefix information *q*1*q*2*...q*k*p*1 0 in the second command, and include the third prefix information *q*1*q*2*...q*k*p*1 1 in the third command. That is, the first device explicitly indicates the second prefix information and the third prefix information in the second command and the third command respectively.

Optionally, the first device may include the second prefix information *q*1*q*2*...q*k*p*1 0 in the second command, and indicate, in the third command, that the third prefix information is *q*1*q*2 *... q*k*p*1 1. For example, the third command is used to change a last bit of the second prefix information, or the third command includes one piece of indication information indicating the third prefix information. For example, the first device indicates, in the third command, to change the last bit of the second prefix information from 0 to 1 on the basis of the second prefix information; or the first device may include the third prefix information *q*1*q*2*...q*k*p*1 1 in the third command, and indicate, in the second command, that the second prefix information is *q*1*q*2*...q*k*p*1 0. For example, the second command is used to change a last bit of the third prefix information, or the second command includes one piece of indication information indicating the second prefix information. For example, the first device indicates, in the second command, to change the last bit of the third prefix information from 1 to 0 on the basis of the third prefix information. This is not specifically limited in this application.

Further, the at least one device further includes a fourth device. Based on the second prefix information *q*1*q*2*...q*k*p*1 0, if the second device feeds back a random number *q*1*q*2*...q*k*p*1 0 10, and the fourth device also feeds back a random number *q*1*q*2 *... q*k*p*1 000, the first device may perform bit collision detection based on random numbers fed back by the second device and the fourth device, and re-generate two pieces of new prefix information, for example, *q*1*q*2*...q*k*p*1 0 0 and *q*1*q*2*...q*k*p*1 0 1. The second device and the fourth device each may feed back a random number again according to a new inventory command until all devices in the at least one device complete random access to the first device.

It should be understood that in this implementation, random number detection may be performed a plurality of times, to ensure that the first device determines that the at least one device accesses the first device. This is not specifically limited in this application.

In this implementation, the first device generates the two pieces of new prefix information based on the specific collision bit of the first random number and the second random number, resends an inventory command, and redetermines, based on the first random number, that the second device accesses the first device. In addition, the first device can replace sending complete prefix information with indication information, and this can reduce transmission signaling overheads.

In a possible implementation, the at least one device further includes a third device, and the manner includes: The first device receives a second random number from the third device, where the second random number corresponds to the first prefix information. The first device determines that the second random number is the same as the first random number. The first device sends second information to the at least one device. Correspondingly, the at least one device (for example, the second device) receives the second information from the first device. The second information indicates the at least one device to re-generate a random number. The second device generates a third random number based on the second information, where the third random number corresponds to the first prefix information. The second device sends the third random number to the first device. Correspondingly, the first device receives the third random number from the second device. Similarly, the third device sends a fourth random number to the first device. Correspondingly, the first device receives the fourth random number from the third device. The first device determines, based on the third random number and the fourth random number, that the second device and the third device access the first device.

Optionally, the second information sent by the first device may include the first random number and/or the second random number. In other words, the second information may indicate a device that feeds back the first random number and/or the second random number to re-generate and report a random number. This implementation can reduce transmission signaling overheads, computing resources, and the like of a device other than the second device and/or the third device.

For example, the first prefix information is *q*1*q*2*...q*k; and correspondingly, the first random number fed back by the second device is *q*1*q*2*...q*k 1 0 10, and the second random number fed back by the third device is *q*1*q*2*...q*k 1 010. In this case, the first device may consider that the third device and the second device are a same device. Collision may occur in subsequent communication. Therefore, the first device can indicate, by using the second information, the at least one device to re-generate and feed back a random number. For example, the third random number re-generated and sent by the second device is *q*1*q*2*...q*k 1 1 0 1, and the fourth random number re-generated and sent by the third device is *q*1*q*2*...q*k 0 111. In this case, after performing bit collision detection based on the third random number and the fourth random number, the first device determines a target collision bit and generates new prefix information. For specific inventory, refer to the foregoing provided implementation until it is determined that the second device and the third device succeed in access. For brevity, details are not described herein.

It should be understood that in this implementation, random number detection may be performed a plurality of times, to ensure that the first device determines that the at least one device accesses the first device. This is not specifically limited in this application.

In this implementation, after detecting a collision bit, the first device determines that the first random number is the same as the second random number, indicates the at least one device to re-generate and send the new random number, and then determines, based on the new random number, that the second device and the third device access the first device.

In a possible implementation, the at least one device further includes a third device, and the manner includes: The first device determines that a second random number generated by the third device according to the first command is the same as the first random number, where the second random number corresponds to the first prefix information. The first device sends third information to the at least one device. Correspondingly, the at least one device (for example, the second device) receives the third information from the first device. The third information indicates the at least one device to resend a random number. The second device sends the first random number in a first time unit based on the third information. Correspondingly, the first device receives the first random number from the second device in the first time unit. Similarly, the third device sends the second random number in a second time unit based on the third information. Correspondingly, the first device receives the second random number from the third device in the second time unit, where the first time unit and the second time unit are time units randomly selected by the second device and the third device respectively for use, and each time unit may be triggered to be generated or generated by using a downlink command. The first device determines, based on the first time unit and the second time unit, that the second device and the third device access the first device.

Optionally, the third information sent by the first device may include the first random number and/or the second random number. In other words, the third information may indicate a device that feeds back the first random number and/or the second random number to re-generate and report a random number. This implementation can reduce transmission signaling overheads, computing resources, and the like of a device other than the second device and/or the third device.

The first time unit may be understood as a time period, a slot, a symbol, a frame, or the like. This is not specifically limited in this application.

For example, the first prefix information is *q*1*q*2*...q*k; and correspondingly, the first random number fed back by the second device is *q*1*q*2*...q*k 10 10, and the second random number fed back by the third device is *q*1*q*2*...q*k 10 10, that is, the first random number is the same as the second random number. In this case, the first device may indicate, by using the third information, the at least one device to send random numbers in different time units. For example, the first device receives the first random number from the second device in a first slot, and receives the second random number from the third device in a second slot. In this case, it may be determined, based on the first slot and the second slot, that the second device and the third device succeed in random access.

It should be understood that in this implementation, random number detection may be performed a plurality of times, to ensure that the first device determines that the at least one device accesses the first device. This is not specifically limited in this application.

In this implementation, after detecting a collision bit, the first device determines that the first random number is the same as the second random number, may indicate the at least one device to separately send random numbers in different time units, and then determine, based on the first time unit and the second time unit, that the second device and the third device access the first device.

In a possible implementation, the first device sends indication information to the second device. Correspondingly, the second device receives the indication information from the first device. The indication information indicates a sending moment of the first random number, and signal quality of the second device is less than a first threshold.

The first threshold may be set. This is not specifically limited in this application.

In this implementation, because bit precision does not meet, a plurality of random numbers arrive at the first device asynchronously. As a result, the first device cannot detect a specific collision bit between the plurality of random numbers. Therefore, from a perspective of signal quality, devices of different signal quality are enabled to send random numbers at different moments, so as to ensure that the plurality of random numbers arrive at the first device simultaneously, and bit collision detection is performed on the random numbers. This identifies and determines that the at least one device accesses the first device.

In a possible implementation, the at least one device further includes a third device, and before the first device determines, based on the first random number, that the second device accesses the first device, the manner includes: The third device sends a second random number to the first device. Correspondingly, the first device receives the second random number from the third device, where the second random number corresponds to the first prefix information. After determining that the first random number collides with the second random number, the first device generates fourth prefix information and fifth prefix information, where the fourth prefix information and the fifth prefix information each include k+1 bits, and the fourth prefix information and the fifth prefix information include at least a part of the first prefix information. The first device sends a fourth command and a fifth command to at least one device (for example, the second device). Correspondingly, the at least one device (for example, the second device) receives the fourth command and the fifth command from the first device. The fourth command is used by the at least one device to obtain the fourth prefix information, and the fifth command is used by the at least one device to obtain the fifth prefix information. The second device sends the first random number to the first device according to the third command. Correspondingly, the first device receives the first random number from the second device, and determines, based on the first random number, that the second device accesses the first device.

It should be noted that, because the fourth prefix information and the fifth prefix information include the at least the part of the first prefix information, the first random number corresponds to the fourth prefix information and the fifth prefix information. Correspondingly, the second random number also corresponds to the two pieces of prefix information.

For example, the first prefix information is *q*1*q*2.*..q*k; and correspondingly, the first random number fed back by the second device is *q*1*q*2*...q*k*p*1 1 1 0, and the second random number fed back by the third device is *q*1*q*2*...q*k p1 10 0. Because the first device does not detect a specific bit collision bit p3, the first device may re-generate prefix information *qlq2...qk* 0 and *qlq2...qk* 1 and re-deliver an inventory command. The second device and the third device respectively feed back the first random number and the second random number based on the new prefix information. For a subsequent bit collision detection manner, refer to the foregoing provided implementations until the first device determines that the second device and the third device succeeds in access. For brevity, details are not described herein.

It should be understood that in this implementation, random number detection may be performed a plurality of times, to ensure that the first device determines that the at least one device accesses the first device. This is not specifically limited in this application.

In this implementation, for a scenario in which a specific collision bit cannot be detected, the first device generates the two pieces of new prefix information, resends an inventory command, and then determines, based on the first random number, that the second device accesses the first device. In addition, the first device can replace complete prefix information with indication information, and this can reduce transmission overheads.

In a possible implementation, the at least one device further includes a third device, and the manner includes: The third device sends a second random number to the first device. Correspondingly, the first device receives the second random number from the third device. The second random number corresponds to the first prefix information, the first random number includes the first suffix information, the second random number includes second suffix information, both the first suffix information and the second suffix information include m bits, and m is an integer greater than or equal to 1. After determining that the first random number collides with the second random number, the first device sends fourth information to the at least one device (for example, the second device). Correspondingly, the at least one device (for example, the second device) receives the fourth information from the first device. The fourth information indicates the at least one device to update p bits of suffix information of a random number, where p is an integer greater than or equal to 1 and less than or equal to m. The second device updates p bits of the first suffix information of the first random number based on the fourth information. Similarly, the third device updates p bits of the second suffix information of the second random number based on the fourth information. The second device sends an updated first random number to the first device. Correspondingly, the first device receives the updated first random number from the second device. Similarly, the third device sends an updated second random number to the first device. Correspondingly, the first device receives the updated second random number from the third device. The updated first random number includes updated first suffix information, and the updated second random number includes updated second suffix information. The first device determines, based on the updated first random number and the updated second random number, that the second device and the third device access the first device.

It should be understood that in this implementation, random number detection may be performed a plurality of times, to ensure that the first device determines that the at least one device accesses the first device. This is not specifically limited in this application.

In this implementation, after determining that the first random number collides with the second random number, the first device can indicate the at least one device to update a random number, and further determine, based on the updated random number, that the at least one device accesses the first device.

It should be noted that, on the basis of this implementation, bit collision detection can still be performed to determine a target collision bit until it is determined that the at least one device accesses the first device. A specific implementation is similar to that in the foregoing manner. Details are not described herein again.

In a possible implementation, P is a quantity of bits at which the first random number collides with the second random number. In other words, P may be a quantity of consecutive bits, or may be a quantity of discrete bis.

If consecutive collision occurs between the first random number and the second random number, the fourth information indicates a value of p; or if discrete collision occurs between the first random number and the second random number, the fourth information indicates a bit at which the first random number collides with the second random number.

Optionally, a value of p may alternatively be set. This is not specifically limited in this application.

In this implementation, detection of consecutive bit collision and discrete bit collision is combined to implement efficient inventory.

For example, the first prefix information is *qlq2...qk.* Correspondingly, the first random number fed back by the second device is *qlq2...qk* p1 0 1 0, and the second random number fed back by the third device is *qlq2...qk* p1 10 0. After performing bit collision detection, the first device determines that first two consecutive collision bits in the first suffix information and the second suffix information are p2 and p3. In this case, the fourth information may separately indicate the at least one device to update 0 1 of the first suffix information and 1 0 of the second suffix information.

The p bits of the suffix information updated by the second device and the third device may be encoded in the following manner. An encoding principle is as follows: Each bit sequence corresponds to unique encoding information, and the encoding information includes only one 1 and the rest are all 0. Specifically, refer to Table 1. Mapping of 2 bits is used as an example. A code corresponding to a bit 00 is 0001, a code corresponding to a bit 01 is 0010, a code corresponding to a bit 10 is 0100, and a code corresponding to a bit 11 is 1000. In this case, the first device may determine, based on the p bits (0010 and 0100) of the updated first suffix information and the updated second suffix information, that bit information of the second device and bit information of the third device before encoding are respectively 0 1 and 1 0.

It should be understood that an advantage of such encoding is that when the first device receives mapped data, collision information between the second device and the third device can be accurately detected. That is, when the first device detects that collision occurs on a bit, that is, determines a location of 1, the first device knows specific bit information of a corresponding bit string before encoding. This completes random access of the second device and the third device.

In a possible implementation, the at least one device further includes a third device, and the manner includes: The second device sends first n bits of the first random number to the first device. Correspondingly, the first device receives the first n bits of the first random number from the second device, and performs collision detection on the first n bits of the first random number and first n bits of a second random number from the third device, n is an integer greater than or equal to 1 and less than k+m, the first random number includes the first suffix information, the second random number generated by the third device according to the first command includes second suffix information, both the first suffix information and the second suffix information include m bits, and m is an integer greater than or equal to 1. After determining that first s bits of the first random number do not collide with first s bits of the second random number, the first device sends fifth information to the at least one device (for example, the second device), where s is a positive integer less than or equal to n. Correspondingly, the at least one device (for example, the second device) receives the fifth information from the first device. The fifth information indicates the at least one device to send first q bits of a random number, and q is an integer greater than n and less than k+m. The second device sends first q bits of the first random number to the first device based on the fifth information. Correspondingly, the first device receives the first q bits of the first random number from the second device, and performs collision detection on the first q bits of the first random number and first q bits of the second random number from the third device. After determining that first t bits of the first random number do not collide with first t bits of the second random number, the first device sends sixth information to the at least one device, where t is a positive integer greater than or equal to s and less than or equal to q. Correspondingly, the at least one device (for example, the second device) receives the sixth information from the first device. The sixth information indicates the second device to send a random number generated according to the first command. The second device sends the first random number to the first device based on the sixth information. Correspondingly, the first device receives the first random number from the second device, and performs collision detection on the first random number and the second random number from the third device, where the first random number and the second random number include k+m bits. After determining that the first random number does not collide with the second random number, the first device determines that the second device and the third device access the first device.

It should be noted that, when the first device completes or is about to complete identification of the random number of the first n bits (or the first q bits) fed back by the second device, the first device may further indicate the second device to feed back more bit information about the first random number.

For example, the first random number fed back by the second device is 0101100110101010. If a value of n is 8, the second device feeds back 8 bits 01011001 of the first random number for the first time. After the first device completes collision detection on the 8 bits, then, if a value of q is indicated to be 12, the second device continues to feed back 12 bits 010110011010 of the first random number. After the first device completes collision detection on last 4 bits, if the second device is finally indicated to feed back the complete first random number 0101100110101010, the first device continues to perform collision detection on last 4 bits until access to the first device succeeds. For specific inventory, refer to the foregoing provided possible implementations. For brevity, details are not described herein again.

It should be understood that, during bit collision detection, if bit collision between random numbers is detected, re-inventory can be performed in the foregoing possible implementation; or if bit collision is not detected, it may be considered that the second device and the third device have completed random access to the first device.

It should be further understood that in this implementation, random number detection may be performed a plurality of times, to ensure that the first device determines that the at least one device accesses the first device. This is not specifically limited in this application.

In this implementation, a segment identification method can be used for a long tag. This can improve inventory efficiency, and reduce signaling transmission overheads.

In a possible implementation, the first command further indicates a value of n.

Optionally, a value of n may alternatively be set. This is not specifically limited in this application.

In this implementation, the quantity of bits of the random number fed back by the second device each time is indicated. This can reduce an inventory delay, and improve random access efficiency.

It should be noted that random number feedback and collision detection are used as examples in the foregoing implementations, are merely examples for description, and should not constitute any limitation on the technical solutions of this application.

It should be understood that the technical solutions of this application are also applicable to tag identifier information feedback and collision detection. An identifier of a tag may be generated by the tag itself, or may be allocated by another device, for example, a base station or a core network device. That is, the tag may feed back all identifier information of the tag to the reader/writer after matching is performed based on prefix information in an inventory command, or feed back remaining bit information in identifier information except matching prefix information. The specific implementation is similar to that in the foregoing method, and details are not described herein again.

In conclusion, according to the solutions provided in this application, a random number is used to replace a complete identifier of the second device for inventory. This can reduce an inventory delay and transmission signaling overheads of the second device, and improve random access efficiency of the second device.

It should be noted that the technical solutions of this application are mainly for identification and inventory of the at least one device (or a plurality of tags). Therefore, the following uses the plurality of tags (for example, a tag #1 and a tag #2) as an example for description.

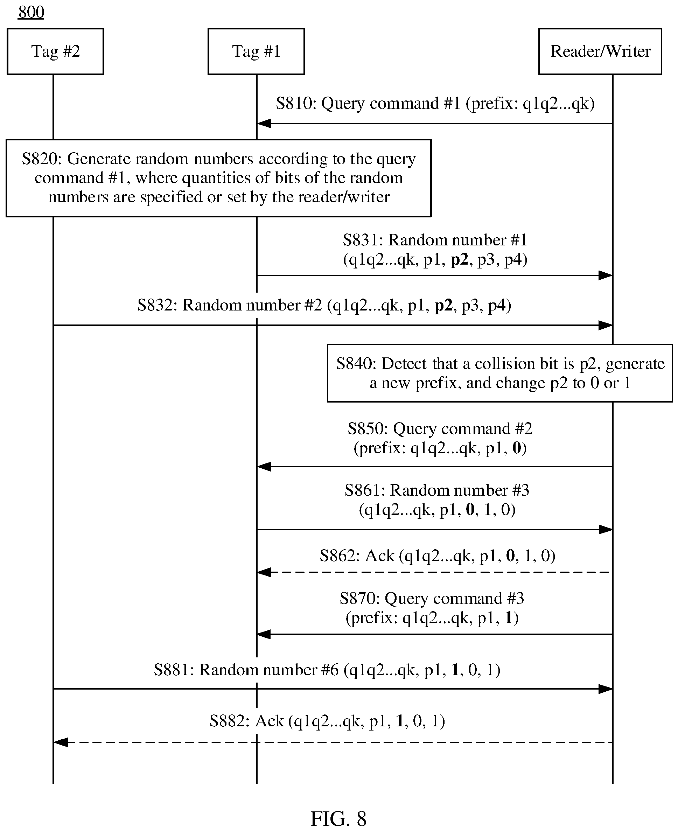

FIG. 8 is a diagram of an example of a tag identification method 800 to which an embodiment of this application is applicable. The following describes the technical solutions of this application by using an example in which execution bodies are a reader/writer and tags. The following specific implementation steps are included.

S810: The reader/writer broadcasts a query command #1 (that is, an example of a first command).

Correspondingly, the tags (for example, a tag #1 and a tag #2) within coverage of the reader/writer receive the query command #1 from the reader/writer.

It should be noted that a name of the first command may be a query command (for example, Query), or may be an inventory command, or may have another name. This is not specifically limited in the technical solutions of this application.

The query command #1 includes prefix information *qlq2...qk* (that is, an example of first prefix information), and k is an integer greater than or equal to 1.

For example, an application layer delivers the inventory command to the reader/writer via a core network or a base station. Correspondingly, the reader/writer receives the inventory command from the base station or the core network, and sends the inventory command to the tag #1 and the tag #2 through broadcast. The inventory command includes the prefix information *qlq2...qk.*

Optionally, the base station may directly send the inventory command to the reader/writer. This is not specifically limited in this application.

Optionally, before sending the prefix information, or when sending the prefix information, the reader/writer sends a select (select) command, where the select command includes indication information #1 for selecting a tag, for example, mask information and flag bit information specified by the reader/writer. In other words, the tag completes an instruction responded by the reader/writer only after the mask information and the flag bit information are matched. For example, check whether query commands and prefix information are consistent.

In a possible implementation, the query command #1 further includes at least one of indication information #2 of a memory area, a start location, and length information of a prefix. For example, after receiving the query command #1, the tag may determine a memory area based on the indication information #2, and then compare bit information after the start location with the prefix information (or the length information of the prefix) to ensure consistency.

In another possible implementation, the query command #1 further includes a start location and/or length information of a prefix, but does not include indication information #2 of a memory area. In this case, the tag may determine the start location based on a default storage area, and then compare bit information after the start location with the prefix information (or the length information of the prefix) to ensure consistency.

Optionally, the query command #1 may include indication information #3, and the indication information #3 indicates all the tags (for example, the tag #1 and the tag #2) to generate random numbers.

A quantity of bits of the random number may be specified by the reader/writer in first information; or a quantity of bits of the random number is set. This is not specifically limited in this application.

In a possible implementation, the reader/writer may send first information, to indicate a quantity of bits generated by a random number. For example, the tag is indicated to generate a 16-bit random number. The first information may be separately sent by the reader/writer, or may be carried in the first command. This is not specifically limited in this application.

In another possible implementation, if there is no first information that indicates the quantity of bits generated by the tag, the tag generates an M-bit random number by default, where the M bits may be a specified value. For example, M is 16 bits.

S820: The tag #1 and the tag #2 (for example, a second device and a third device) generate a random number #1 and a random number #2 (that is, examples of a first random number and a second random number) respectively according to the query command #1.

For example, the quantity of bits of the random number is specified by the reader/writer, or the quantity of bits of the random number is set to 16. In this case, bit information corresponding to random numbers generated by the tag #1 and the tag #2 is both *q*1*q*2*...q*k*,* p1, p2, p3, p4. In this case, k=12. For example, the two random numbers are *qlq2...qk,* 1, 0, 0, 1 and *qlq2...qk,* 1, 1, 1, 0 respectively.

S831: The tag #1 sends the random number #1 (for example, the example of the first random number) to the reader/writer.

Correspondingly, the reader/writer receives the random number #1 from the tag #1.

S832: Similarly, the tag #2 sends the random number #2 (for example, the example of the second random number) to the reader/writer.

Correspondingly, the reader/writer receives the random number #2 from the tag #2.

It should be noted that, before sending the random number #1, the tag #1 compares first k bit information of the random number #1 with the prefix information of the k bits received in step S810. If the first k bit information of the random number #1 and the prefix information of the k bits are consistent, the tag #1 sends all information or a part of information of the random number #1 to the reader/writer. A specific implementation of the tag #2 before the random number #2 is sent is similar to the foregoing implementation. For brevity, details are not described herein again.

In other words, on this basis, the tag may send the complete random number to the reader/writer, or may send remaining bits in the random number except a matching prefix. This is not specifically limited in this application.

For example, it can be learned from step S820 that the random number #1 is *q*1*q*2*...q*k*,* 1, 0, 0, 1, and the random number #2 is *q*1*q*2*...q*k*,* 1, 1, 1, 0. In this case, the tag #1 and the tag #2 may send the complete random number #1 and the complete random number #2 respectively to the reader/writer; or the tag #1 sends bit information 1, 0, 0, 1 (that is, an example of a first suffix information) to the reader/writer, and the tag #2 sends bit information 1, 1, 1, 0 (that is, an example of a second suffix information) to the reader/writer. This implementation can reduce signaling overheads.

S840: The reader/writer determines a specific collision bit, and generates two pieces of new prefix information (that is, second prefix information and third prefix information).

For example, the reader/writer performs collision detection based on the received random number #1 and random number #2 (*q*1*q*2*...q*k*,* p1, p2, p3, p4), and determines that the specific collision bit is p2. The bit p2 is changed to 0 and 1 to generate new prefix information, that is, *q*1*q*2*...q*k*,* 1, 0 and *qlq2...qk,* 1, 1.

Optionally, the random number feedback and bit collision detection based on the random numbers are merely examples for description. The technical solutions of this application are also applicable to identifier information feedback and bit collision detection. Specific implementations are similar, and details are not described herein again. It should be understood that identifier information of each tag is unique, or is locally unique.

For example, the tag #1 and the tag #2 compare prefix information with identifier information stored by the tag #1 and the tag #2, and determine whether prefixes of the prefix information and the identifier information stored by the tag #1 and the tag #2 are consistent. If the prefix information and the identifier information are consistent, complete tag identifiers are sent to the reader/writer, or remaining bit information in tag identifiers except the matching prefixes is sent to the reader/writer. For example, it is assumed that the prefix information is 0100... 1101, identifier information #1 stored in the tag #1 is 0100... 11010101, and identifier information #2 stored in the tag #2 is 0100... 11010110. It is apparent that the prefix information of k bits is consistent with first k bits in the identifier information stored in the tag. In this case, the tag #1 and the tag #2 may send the complete identifier information #1 and identifier information #2 respectively to the reader/writer; or the tag #1 sends bit information 0101 to the reader/writer, and the tag #2 sends bit information 0110 to the reader/writer. This implementation can reduce signaling overheads.

It should be noted that, if the reader/writer can identify the tag #1 and the tag #2 based on the random numbers or the identifier information, that is, the reader/writer determines that the tag #1 and the tag #2 access the reader/writer, the following steps S850 to S882 may be omitted. This is not limited in this application.

S850: The reader/writer broadcasts a query command #2 (that is, an example of a second command).

Correspondingly, the tags (for example, the tag #1 and the tag #2) within the coverage of the reader/writer receive the query command #2 from the reader/writer.

The query command #2 includes prefix information *q*1*q*2*...q*k*,* 1, 0 (that is, an example of second prefix information), and k is an integer greater than or equal to 1.

Optionally, before sending the prefix information, or when sending the prefix information, the reader/writer sends a select command to the tag. For a specific implementation, refer to step S810. For brevity, details are not described herein.

Optionally, the query command #2 may further include at least one of indication information #2 of a memory area, a start location, and length information of a prefix.

It should be noted that, the second command and the first command may be same inventory commands, or may be different.

S861: The tag #1 sends a random number #3 to the reader/writer according to the query command #2.

Correspondingly, the reader/writer receives the random number #3 from the tag #1.

For example, after receiving new prefix information *qlq2...qk,* 1, 0, the tag #1 re-matches prefixes, and feeds back bit information to the reader/writer. If the reader/writer may receive a tag response without a conflict, it indicates that the tag #1 successfully accesses the reader/writer.

The random number #3 may be a random number re-generated by the tag #1, for example, may be *qlq2...qk,* 1, 0, 1, 0, where the random number #3 is different from the random number #1 generated according to the first command. Alternatively, the random number #3 may be a resent random number, for example, *q*1*q*2*...q*k*,* 1, 0, 0, 1. The random number #3 is the same as the random number #1 generated according to the first command. This is not specifically limited in this application.

It should be understood that the random number #3 sent by the tag #1 to the reader/writer may include prefix information (for example, *q*1*q*2*...q*k) and suffix information (for example, 1, 0 or 0, 1). Alternatively, the random number #3 sent by the tag #1 to the reader/writer may not include feedback prefix information (for example, *q*1*q*2*...q*k), but includes feedback suffix information (for example, 1, 0 or 0, 1). This is not limited in this application.

S862: The reader/writer sends an Ack message to the tag #1.

Correspondingly, the tag #1 receives the Ack message from the reader/writer.

The Ack message indicates that conflict resolution succeeds, and the message may include the random number #3 corresponding to the tag #1. The random number #3 includes prefix information and suffix information, or the random number #3 includes suffix information.

It should be understood that this implementation is determined based on a case in which bit information fed back by the tag #1 does not conflict.

S870: The reader/writer broadcasts a query command #3 (that is, an example of a third command).

Correspondingly, the tags (for example, the tag #1 and the tag #2) within the coverage of the reader/writer receive the query command #3 from the reader/writer.

For example, the query command #3 includes query indication information #4, where the indication information #4 indicates that prefix information (that is, third prefix information) is *qlq2...qk,* 1, 1, and k is an integer greater than or equal to 1.

In a possible implementation, the reader/writer may include first new prefix information *"q*1*q*2*...q*k*,* 1, 0" in the query command #2 in step S850. In this case, the query command #3 in step S870 may carry the indication information #4 indicating that second new prefix information is *qlq2...qk,* 1, 1.

For example, the indication information #4 indicates a relationship between the second new prefix information in the query command #3 and the first new prefix information in step S850. For example, the second new prefix information is obtained by adding 1 to a last bit of the first new prefix information; or the indication information #4 indicates to change a last bit of the first new prefix information from 0 to 1.

In this implementation, the reader/writer determines indication information in a second inventory command based on the relationship between the two pieces of new prefix information to replace sending the complete second new prefix information. This can also reduce signaling overheads to some extent.

Optionally, the query command #3 includes the prefix information *qlq2...qk,* 1, 1 (for example, an example of the third prefix information), and k is an integer greater than or equal to 1.

In another possible implementation, the reader/writer includes the first new prefix information, namely, the second prefix information *q*1*q*2*...q*k*,* 1, 0 in the query command #2, and includes the second new prefix information, namely, the third prefix information *q*1*q*2*...q*k*,* 1, 1 in the query command #3. This is not specifically limited in this application.

It should be understood that a sequence of sending the two pieces of new prefix information is not limited in this application.

Optionally, before sending the prefix information, or when sending the prefix information, the reader/writer may send a select (select) command to the tag. For a specific implementation, refer to step S810. For brevity, details are not described herein.

Optionally, the query command #3 may further include at least one of indication information #2 of a memory area, a start location, and length information of a prefix.

S881: The tag #2 sends a random number #6 to the reader/writer.

Correspondingly, the reader/writer receives the random number #6 from the tag #2.

For example, after receiving new prefix information *qlq2...qk,* 1, 1, the tag #2 may further send the random number #6 to the reader/writer after generating and matching the random number #6. If the reader/writer may receive a tag response without a conflict, it indicates that the tag #2 successfully accesses the reader/writer.

The random number #6 may be a random number re-generated by the tag #2, for example, may be *q*1*q*2*...q*k*,* p1, 1, 1, 1, where the random number #4 is different from the random number #2 generated according to the first command.

Optionally, the random number #6 may be a resent random number, for example, *qlq2...qk,* p1, 1, 1, 0. The random number #4 is the same as the random number #2 generated according to the first command. This is not specifically limited in this application.

It should be noted that the tag #2 feeding back the random number #6 is merely an example for description, and should not constitute any limitation on the technical solutions of this application.

S882: The reader/writer sends an Ack message to the tag #2.

Correspondingly, the tag #2 receives the Ack message from the reader/writer.

The Ack message indicates that conflict resolution succeeds, and the message may include the random number #6 corresponding to the tag #2. The random number #6 includes prefix information and suffix information, or the random number #6 includes suffix information.

It should be understood that this implementation is determined based on a case in which bit information fed back by the tag #2 does not conflict.

It should be noted that random number feedback and detection are used as examples in the foregoing implementations, are merely examples for description, and should not constitute any limitation on the technical solutions of this application.

Optionally, the technical solutions of this application are also applicable to tag identifier information feedback and detection. An identifier of a tag may be generated by the tag itself, or may be allocated by another device, for example, a base station or a core network device. That is, the tag may feed back all identifier information of the tag to the reader/writer after matching is performed based on prefix information in an inventory command, or feed back remaining bit information in identifier information except matching prefix information. This is not specifically limited in this application. A specific implementation is similar to that in the foregoing method. Details are not described herein again.

In this implementation, a random number is used to replace identifier information of a tag for feedback and collision detection, and a new inventory method is provided. In addition, when a quantity of bits of the random number that is fed back is less than that of the identifier information, this can further reduce transmission signaling overheads and a contention access delay.

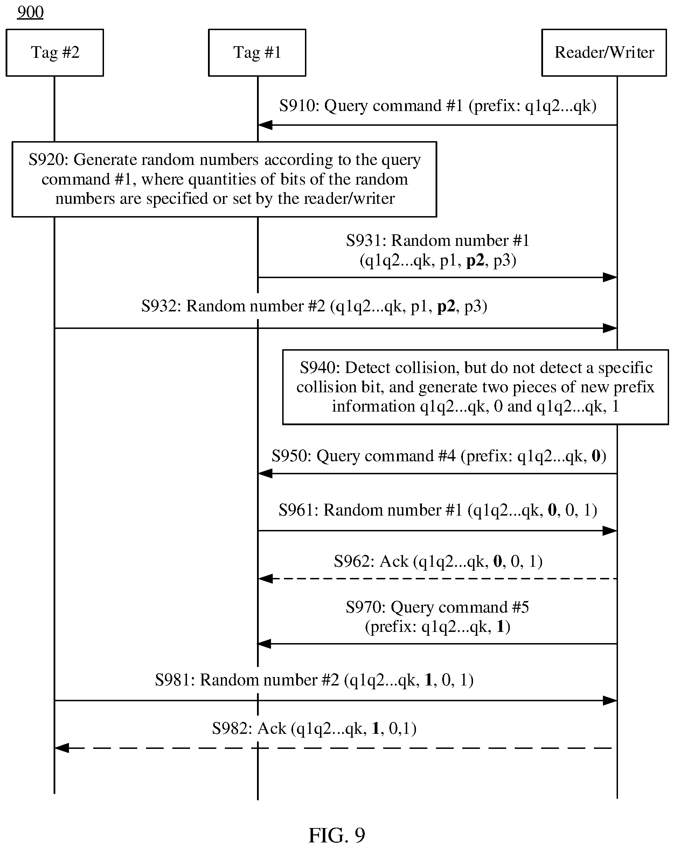

FIG. 9 is a diagram of another example of a tag identification method 900 to which an embodiment of this application is applicable. In this implementation, how a reader/writer detects a tag collision bit when tag synchronization precision does not meet is described. The following specific implementation steps are included.

S910: The reader/writer broadcasts a query command #1 (that is, an example of a first command).

Correspondingly, tags (for example, a tag #1 and a tag #2) within coverage of the reader/writer receive the query command #1 from the reader/writer.

The query command #1 includes prefix information *q*1*q*2*...q*k (that is, an example of first prefix information), and k is an integer greater than or equal to 1.

A quantity of bits of a random number may be specified by the reader/writer by using first information, and the first information may be separately sent by the reader/writer, or may be carried in the first command; or a quantity of bits of a random number is set. This is not specifically limited in this application.

In a possible implementation, the reader/writer may send first information, to indicate a quantity of bits generated by a random number. For example, the tag is indicated to generate a 16-bit random number.

In another possible implementation, if there is no first information that indicates the quantity of bits generated by the tag, the tag generates an M-bit random number by default, where the M bits may be a specified value. For example, M is 16 bits.

S920: The tag #1 and the tag #2 (for example, a second device and a third device) generate a random number #1 and a random number #2 (that is, examples of a first random number and a second random number) respectively according to the query command #1.

For example, the quantity of bits of the random number is specified by the reader/writer, or the quantity of bits of the random number is set to 16. In this case, bit information corresponding to random numbers generated by the tag #1 and the tag #2 is both *qlq2...qk,* p1, p2, p3. In this case, k=13. For example, the two random numbers are *qlq2...qk,* 1, 0, 0 and *qlq2...qk,* 0, 1, 1.

S931: The tag #1 sends the random number #1 (that is, the example of the first random number) to the reader/writer.

Correspondingly, the reader/writer receives the random number #1 from the tag #1.

S932: Similarly, the tag #2 sends the random number #2 (that is, the example of the second random number) to the reader/writer.

Correspondingly, the reader/writer receives the random number #2 from the tag #2.

For example, the tag #1 and the tag #2 may send the complete random number #1 and the complete random number #2 respectively to the reader/writer; or the tag #2 may send bit information 1, 0, 0 to the reader/writer, and the tag #1 may send bit information 0, 1, 1 to the reader/writer. This implementation can reduce signaling overheads. This is not specifically limited in this application.

It should be noted that implementations of steps S910 to S932 are basically similar to those of steps S810 to S832. For details, refer to the foregoing descriptions. For brevity, details are not described herein again.

S940: The reader/writer generates two pieces of new prefix information (that is, fourth prefix information and fifth prefix information).

The prefix information may be generated by adding a new bit to the prefix information in step S910.

For example, the reader/writer detects, based on received feedback bits, that collision occurs between the tag #1 and the tag #2, but does not determine a specific collision bit. Therefore, the two pieces of new prefix information are re-inventoried. For example, if the query command #1 includes the prefix information *qlq2...qk,* the new prefix information is *qlq2...qk,* 0 and *q*1*q*2*...q*k*,* 1.

S950: The reader/writer broadcasts a query command #4 (that is, an example of a fourth command).

Correspondingly, the tags (for example, the tag #1 and the tag #2) within the coverage of the reader/writer receive the query command #4 from the reader/writer.

The query command #4 includes the prefix information *q*1*q*2*...q*k*,* 0 (that is, an example of the fourth prefix information), and k is an integer greater than or equal to 1.

S961: The tag #1 sends a random number #1 to the reader/writer according to the query command #4.

Correspondingly, the reader/writer receives the random number #1 from the tag #1.

For example, after receiving the new prefix information *qlq2...qk,* 0, the tag #1 re-matches prefixes, and feeds back bit information *qlq2...qk,* 0, 1, 1 to the reader/writer. If the reader/writer may receive a tag response without a conflict, it indicates that the tag #1 successfully accesses the reader/writer.

S962: The reader/writer sends an Ack message to the tag #1.

Correspondingly, the tag #1 receives the Ack message from the reader/writer.

The Ack message indicates that conflict resolution succeeds, and the message may include the random number # 1 corresponding to the tag #1.

The random number #1 includes prefix information and suffix information, or the random number #1 includes suffix information. It should be understood that this implementation is determined based on a case in which bit information fed back by the tag #1 does not conflict.

S970: The reader/writer broadcasts a query command #5 (that is, an example of a fifth command).

Correspondingly, the tags (for example, the tag #1 and the tag #2) within the coverage of the reader/writer receive the query command #5 from the reader/writer.

For example, the query command #5 includes query indication information #4, where the indication information #4 indicates that the prefix information is *qlq2...qk,* 1, and k is an integer greater than or equal to 1.

In a possible implementation, the reader/writer may include first new prefix information *"q*1*q*2*...qk,* 1" in the query command #2 in step S950. In this case, the query command #5 in step S970 may carry the indication information #4 indicating that second new prefix information is *qlq2...qk,* 1.

For example, the indication information #4 indicates a relationship between the second new prefix information in the query command #5 and the first new prefix information in step S950. For example, the second new prefix information is obtained by adding 1 to a last bit of the first new prefix information; or the indication information #4 indicates to change a last bit of the first new prefix information from 0 to 1.

In this implementation, the reader/writer determines indication information in a second inventory command based on the relationship between the two pieces of new prefix information to replace sending the complete second new prefix information. This can also reduce signaling overheads to some extent.

Optionally, the query command #5 includes the prefix information *qlq2...qk,* 1 (for example, an example of the fifth prefix information), and k is an integer greater than or equal to 1.

In another possible implementation, the reader/writer includes the fourth prefix information *qlq2...qk,* 0 in the query command #4 and includes the fifth prefix information *qlq2...qk,* 1, 1 in the query command #5. It should be understood that a sequence of sending the two pieces of prefix information is not limited in this application.

S981: The tag #2 sends a random number #2 to the reader/writer.

Correspondingly, the reader/writer receives the random number #2 from the tag #2.

For example, after receiving the new prefix information *qlq2...qk,* 1, the tag #2 may further send the random number #2 to the reader/writer after generating and matching the random number #2. If the reader/writer may receive a tag response without a conflict, it indicates that the tag #2 successfully accesses the reader/writer. S982: The reader/writer sends an Ack message to the tag #2.

Correspondingly, the tag #2 receives the Ack message from the reader/writer.

The Ack message indicates that conflict resolution succeeds, and the message may include the random number #2 fed back by the tag #2. The random number #2 includes prefix information and suffix information, or the random number #2 includes suffix information.

It should be understood that implementations of subsequent steps S950 to S982 are similar to those of steps S850 to S882, that is, for a process of identifying the tag and performing conflict resolution by the reader/writer, refer to the foregoing method 800. For brevity, details are not described herein.

Optionally, in embodiments of this application, the reader/writer may send indication information to a tag with poorer signal quality, where the indication information indicates the tag to adjust sending time, so that arrival moments of identifier information or random numbers sent by tags to the reader/writer are the same. This implements synchronization precision of the tags.

For example, a tag (for example, a tag #1) whose signal quality is lower than a first threshold is used as a tag with poorer signal quality. The reader/writer sends the indication information to the tag #1. Correspondingly, the tag #1 receives the indication information from the reader/writer. The indication information indicates the tag #1 to adjust the time for sending the identifier information or the random number. The tag #1 adjusts, based on the indication information, the time for sending the identifier information or the random number, so that information bits fed back by the tag #1 and a tag #2 arrive at the reader/writer at the same moment. This implements synchronization precision of the tags.

It should be noted that, in a scenario in which a random number is used, a plurality of tags may generate a same random number. For example, prefix information carried in a query command is *qlq2...qk,* p1, 1. Random numbers generated by the tag #1 and the tag #2 according to the query command are both *qlq2...qk,* p1, 1, 0, 1, 0. When the reader/writer broadcasts an indication message indicating that conflict resolution succeeds, because the indication message carries the random numbers generated by the tags, the plurality of tags may all hold that the random access succeeds. In this case, when subsequent data transmission is performed, for example, application layer data transmission is performed, application layer data or identifier information sent by the plurality of tags may be different. As a result, collision occurs. Therefore, the reader/writer needs to further perform conflict resolution.

In a possible implementation, the reader/writer sends indication information (that is, an example of second information) to the tag #1 and the tag #2, where the indication information indicates the tag #1 and the tag #2 that have data transmission collision to perform random access again. Then, the foregoing conflict resolution process, for example, steps S931 to S982, is repeated, until a conflict is resolved, so that the tags and a network can communicate with each other normally.

In another possible implementation, a slotted-aloha (slotted-aloha) manner may also be used to implement anti-collision of the tags. That is, the tags each randomly select an access slot (for example, a first time unit and a second time unit), and send the generated random number in the corresponding slot. If the reader/writer successfully identifies the tags, the reader/writer sends conflict resolution messages to the corresponding tags. Finally, the tags and the network can communicate with each other normally.

It should be noted that random number feedback and detection are used as examples in the foregoing implementations, are merely examples for description, and should not constitute any limitation on the technical solutions of this application.

Optionally, the technical solutions of this application are also applicable to tag identifier information feedback and detection. An identifier of a tag may be generated by the tag itself, or may be allocated by another device, for example, a base station or a core network device. That is, the tag may feed back all identifier information of the tag to the reader/writer after matching is performed based on prefix information in an inventory command, or feed back remaining bit information in identifier information except matching prefix information. This is not specifically limited in this application. A specific implementation is similar to that in the foregoing method. Details are not described herein again.

In this implementation, in a scenario in which a collision bit cannot be detected, 1 and 0 may be added to a prefix in a previous query command, to generate two new prefixes to continue to detect the collision bit. This implements tag inventory. A random number is used to replace identifier information of a tag for feedback and collision detection, and a new inventory method is provided. In addition, when a quantity of bits of the random number that is fed back is less than that of the identifier information, this can further reduce transmission signaling overheads and a contention access delay.

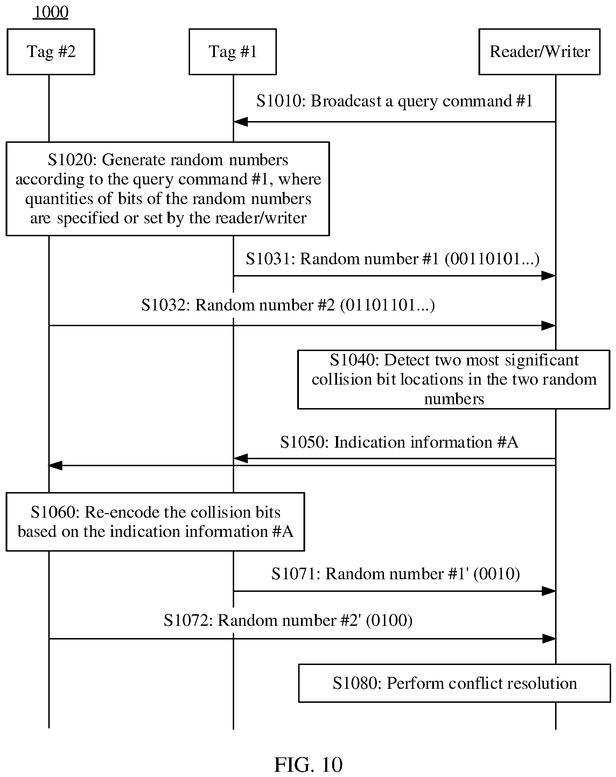

FIG. 10 is a diagram of still another example of a tag identification method 1000 to which an embodiment of this application is applicable. The following describes the technical solutions of this application by using an example in which execution bodies are a reader/writer and tags. The following specific implementation steps are included.

S 1010: The reader/writer broadcasts a query command #1 (that is, an example of a first command).

Correspondingly, the tags (for example, a tag #1 and a tag #2) within coverage of the reader/writer receive the query command #1 from the reader/writer.

The query command #1 includes prefix information *qlq2...qk* (that is, an example of first prefix information), and k is an integer greater than or equal to 1.

For example, an application layer delivers the inventory command to the reader/writer via a core network or a base station. Correspondingly, the reader/writer receives the inventory command from the base station or the core network, and sends the inventory command to the tag #1 and the tag #2 through broadcast. The inventory command includes the prefix information *qlq2...qk.*

Optionally, the base station may directly send the inventory command to the tags. This is not specifically limited in this application.

A quantity of bits of a random number may be specified by the reader/writer in first information; or a quantity of bits of a random number is set. This is not specifically limited in this application.

In a possible implementation, the reader/writer may send first information, to indicate a quantity of bits generated by a random number. For example, the tag is indicated to generate a 16-bit random number. The first information may be separately sent by the reader/writer, or may be carried in the first command. This is not specifically limited in this application.

In another possible implementation, if there is no first information that indicates the quantity of bits generated by the tag, the tag generates an M-bit random number by default, where the M bits may be a specified value. For example, M is 16 bits.

S1020: The tag #1 and the tag #2 (for example, a second device and a third device) generate a random number #1 and a random number #2 (that is, examples of a first random number and a second random number) respectively according to the query command #1.

For example, the quantity of bits of the random number is specified by the reader/writer, or the quantity of bits of the random number is set to 16. In this case, the random number generated by the tag #1 may be *qlq2...qk,* ..., 0101, the random number generated by the tag #2 may be *qlq2...qk,* ..., 0110, and the quantities of bits of the random numbers are 16.

Optionally, first m bits of a random number fed back by a tag for the first time may be encoded in the following manner. An encoding principle is as follows: Each bit sequence corresponds to unique encoding information, and the encoding information includes only one 1 and the rest are all 0. As shown in Table 1. Mapping of 2 bits is used as an example. A code corresponding to a bit 00 is 0001, a code corresponding to a bit 01 is 0010, and so on.

It should be understood that an advantage of this encoding is that when the reader/writer receives mapped data, collision information of the tag can be accurately detected. That is, when the reader/writer detects that collision coccus on a bit, a location of 1 is determined, and specific bit information of a corresponding bit string before encoding is known.

Optionally, a random number fed back by a tag for the first time may not be re-encoded, that is, all bit information is sent, or remaining bit information after prefix information is matched in the random number is sent.

It should be noted that the code mapping manner shown in Table 1 may be specified in a protocol. The coding scheme and the quantity of coded bits in the code mapping manner are merely examples for description, and should not constitute any limitation on the technical solutions of this application.

S1031: The tag #1 sends the random number #1 (for example, the example of the first random number) to the reader/writer.

Correspondingly, the reader/writer receives the random number #1 from the tag #1.

S1032: Similarly, the tag #2 sends the random number #2 (for example, the example of the second random number) to the reader/writer.

Correspondingly, the reader/writer receives the random number #2 from the tag #2.

For example, the random number #1 fed back by the tag #1 is *qlq2...qk,* ..., 0101, and the random number #2 fed back by the tag #2 is *qlq2...qk,* ..., 0110. The two random numbers have a same quantity of bits: 16.

S 1040: The reader/writer detects p most significant collision bits in the random number #1 and the random number #2.

For example, 2 bits are used as an example, that is, p=2. The tag #1 sends the random number #1 (for example, 00110101...) to the reader/writer, and the tag #2 sends the random number #2 (for example, 01101101...) to the reader/writer. The reader/writer performs collision detection on the random number #1 and the random number #2, and two most significant collision bits in the random number #1 and the random number #2 are a second bit and a fourth bit (that is, the first random number and the second random number are sent in discrete collision).

S 1050: The reader/writer sends indication information #A (that is, an example of fourth information) to the tag #1 and the tag #2.

Correspondingly, the tags (for example, the tag #1 and the tag #2) within the coverage of the reader/writer receive the indication information #A from the reader/writer.

The indication information #A indicates that the collision bits (for example, the second bit and the fourth bit) are encoded in the manner in Table 1, and the indication information #A indicates the specific collision bits.

For example, a method for indicating discrete collision bits may be as follows: The indication information #A sent by the reader/writer includes a prefix (that is, information about a bit on which collision does not occur) and a bitmap, and a location of 1 in the bitmap is encoded in the manner in Table 1.

Optionally, if the indication information #A sent by the reader/writer does not include a prefix (that is, information about a bit on which collision does not occur), it indicates a location of a default start prefix. A quantity of 1s in the bitmap implicitly indicates a value of m. Optionally, the reader/writer may further explicitly indicate a value of p; or a value of p may be a specified value.

For example, if the reader/writer sends only a prefix (that is, the information about the bit on which collision does not occur), the tag does not need to perform re-encoding.

It should be understood that, in this implementation, consecutive collision bits may be fed back.

For example, a method for indicating the consecutive collision bits may be as follows: The indication information #A sent by the reader/writer includes a prefix (that is, information about a bit on which collision does not occur), and the indication information #A indicates that first p bits after a prefix is matched are encoded in the manner in Table 1, that is, a value of p. Optionally, if the indication information #A does not carry a value of p, a quantity of bits is defaulted, that is, may be preset in advance.

Optionally, if the indication information #A sent by the reader/writer does not include a prefix (that is, information about a bit on which collision does not occur), it indicates a location of a default start prefix.

The value of p may be explicitly indicated to the tag #1 and the tag #2; or the value of p may be a specified value; or the value of p may be changed in an inventory process. This is not specifically limited in this application.

S1060: The tags re-encode the collision bits based on the indication information #A.

For example, 2 bits are used as an example, that is, p=2. The random number #1 sent by the tag #1 is 00110101..., and the random number #2 sent by the tag #2 is 01101101... The two most significant collision bits detected by the reader/writer are the second bit and the fourth bit, that is, the random number #1 and the random number #2 are discrete collision bits. Then, after re-encoding in the encoding manner shown in Table 1, the collision bits of the random number #1 are 01, encoded bit information is 0010, the collision bits of the random number #2 are 10, and encoded bit information is 0100.

S1071: The tag #1 sends an encoded random number #1' to the reader/writer.

Correspondingly, the reader/writer receives the encoded random number #1' from the tag #1.

S1072: Similarly, the tag #2 sends an encoded random number #2' to the reader/writer.

Correspondingly, the reader/writer receives the encoded random number #2' from the tag #2.

Optionally, the tag may feed back a re-encoded part (that is, specific collision bit information); or the tag may feed back a remaining part, after a prefix is matched, except a re-encoded bit part.

For example, the random number #1 fed back by the tag #1 may be 0010, and the random number #2 fed back by the tag #2 may be 0100.

S 1080: The reader/writer performs conflict resolution.

Specifically, the reader/writer determines, based on encoded bit information fed back by the tag #1 and the tag #2, specific bit information of corresponding bit strings before encoding, and identifies the corresponding tags. If the reader/writer directly identifies the tags, the reader/writer may directly send a conflict resolution message. When conflict resolution is complete, the tags and reader/writer can perform data transmission.

It should be noted that random number feedback and detection are used as examples in the foregoing implementations, are merely examples for description, and should not constitute any limitation on the technical solutions of this application.

Optionally, the technical solutions of this application are also applicable to tag identifier information feedback and detection. An identifier of a tag may be generated by the tag itself, or may be allocated by another device, for example, a base station or a core network device. That is, the tag may feed back all identifier information of the tag to the reader/writer after matching is performed based on prefix information in an inventory command, or feed back remaining bit information in identifier information except matching prefix information. This is not specifically limited in this application. A specific implementation is similar to that in the foregoing method. Details are not described herein again.

In this implementation, a random number is used to replace identifier information of a tag for feedback and collision detection, and a new inventory method is provided. In addition, when a quantity of bits of the random number that is fed back is less than that of the identifier information, this can further reduce transmission signaling overheads and a contention access delay.

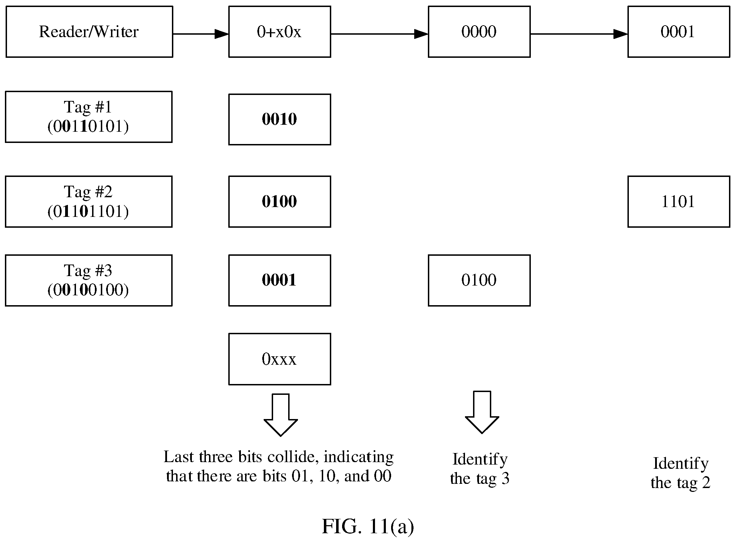

FIG. 11(a) to FIG. 11(c) are a diagram of an example of a multi-bit collision tree-based inventory procedure to which an embodiment of this application is applicable. As shown in FIG. 11(a), a method is for a scenario of discrete collision bits, and 2 bits are used as an example. Bit information fed back by a tag #1 is 00110101, bit information fed back by a tag #2 is 01101101, and bit information fed back by a tag #3 is 00100100. After the three tags feed back identifier information, a reader/writer determines that a second bit and a fourth bit are two most significant collision bits, and sends indication information #A to the tags separately, where the indication information #A includes a prefix 0+x1x (for example, 0 and 1010) and indicates that a first bit and a third bit after the prefix 0 are the collision bits. After the tags receive the indication information #A, the tags may re-encode the corresponding 2 bits, and resend re-encoded 2 bits to the reader/writer.

It can be seen from FIG. 11(a) that re-encoded bit information of the three tags is 0010, 0100, and 0001 respectively. The reader/writer may determine, based on locations of 1s in the encoded bit information, specific bit information of corresponding bit strings before encoding, that is, the collision bits are 01, 10, and 00 respectively. In this case, based on the encoded bit information, it can be seen that collision occurs on last 3 bits, that is, 010, 100, and 001. Then, the reader/writer sends 0000, and the tag #3 is matched and identified. The reader/writer then sends 0001, and the tag #2 is matched and identified, and so on. This implements efficient tag identification.

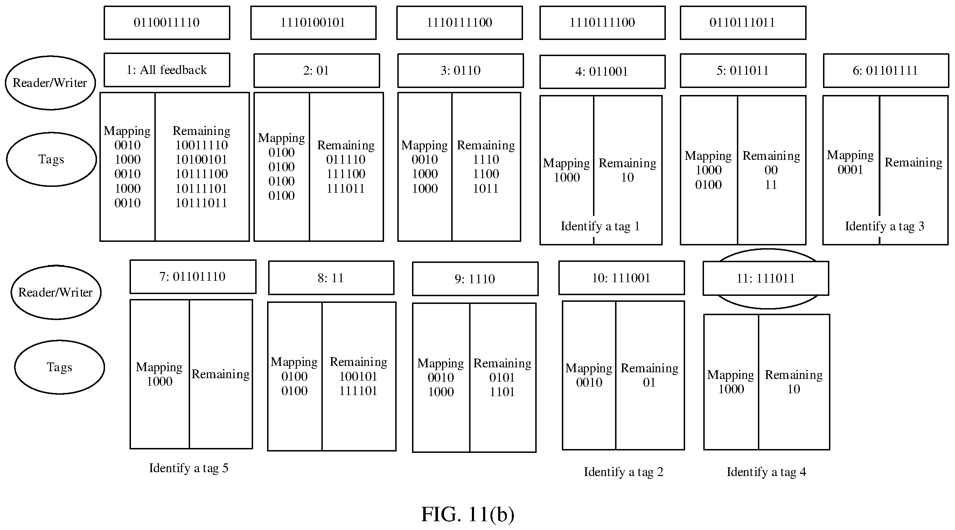

As shown in FIG. 11(b), a method is for a scenario of consecutive collision bits, and 2 bits are used as an example. When all five tags perform feedback for the first time, a reader/writer determines that first 2 bits collide, and are respectively mapped to 0010, 1000, 0010, 1000, and 0010. In second feedback, first 2 bits in remaining bits of the five tags are the same, and are all mapped to 0100. In third feedback, first 2 bits in remaining bits of the tags collide, and are respectively mapped to 0010, 1000, and 1000. In fourth feedback, first 2 bits in remaining bits of the tags collide, and are mapped to 1000. In this case, the reader/writer may identify a tag 1. Operations are performed in a similar manner until all the five tags are successfully identified.

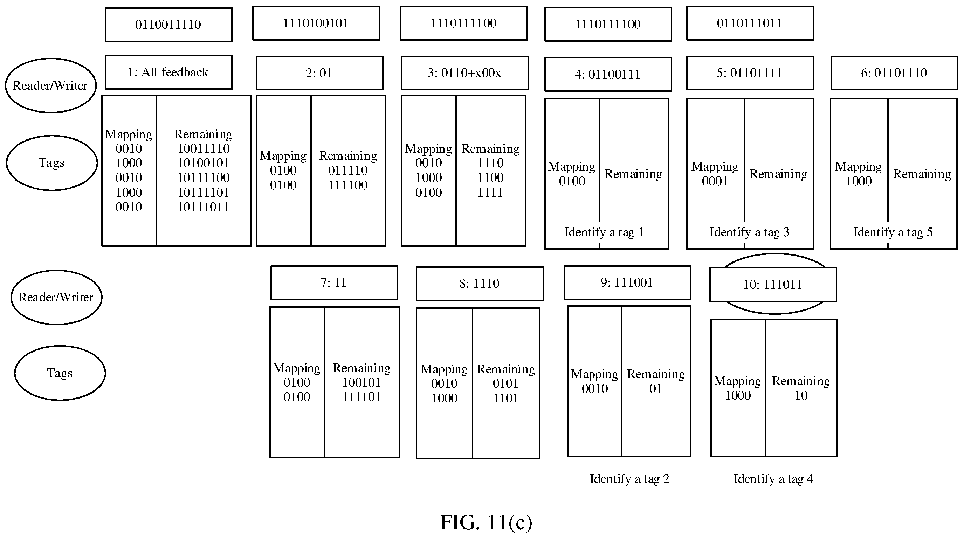

As shown in FIG. 11(c), a method is based on consecutive collision bit (MQT) identification, a scenario based on discrete collision bit identification is superimposed, and 2 bits are used as an example. When all five tags perform feedback for the first time, first 2 bits collide, and are respectively mapped to 0010, 1000, 0010, 1000, and 0010. In second feedback, first 2 bits in remaining bits of the five tags are the same, and are all mapped to 0100. In third feedback, a reader/writer sends indication information indicating that a bit collision occurs at a first bit and a fourth bit in remaining bits of the tags, that is, 01 and 11. The tags map the collision bits to 0010, 1000, and 0100 respectively based on the indication information. In fourth feedback, last two consecutive bits in remaining bits of the tags collide, and the tag performs mapping to 0100. In this case, the reader/writer may determine that bits before mapping is 10, and therefore identify a tag 1. Operations are performed in a similar manner until all the five tags are successfully identified.

It can be learned from the foregoing that, on the basis of consecutive collision bit (MQT) identification, discrete collision bit identification is superimposed to implement effect of high efficient identification based on consecutive and discrete collision bits (EMQT), and implement inventory efficiency greater than 45%. Similar to an MQT, specific implementation efficiency is related to tag ID length, tag bit quantity distribution, and a value of m. Analysis is similar to that in an MQT manner. Example scenarios are as follows: A quantity of tags is n=5, tag ID length L=10 bits, and m=2. Quantities of cycles for MQT and EMQT identification can be seen from identification processes. It can be seen that, that the MQT in FIG. 11(b) in the figure requires 11 cycles, and corresponding efficiency is 45.5%. However, EMQT identification in FIG. 11(c) in the figure requires 10 cycles, and corresponding efficiency is 50%. It is obvious that the efficiency in the EMQT is improved by 21%.

In this implementation, discrete bit detection is introduced on the basis of consecutive bit collision. Discrete collision bits are indicated, so that the tag re-encodes the discrete bits. This improves inventory efficiency. Discrete detection is combined with consecutive detection, to implement efficient inventory.

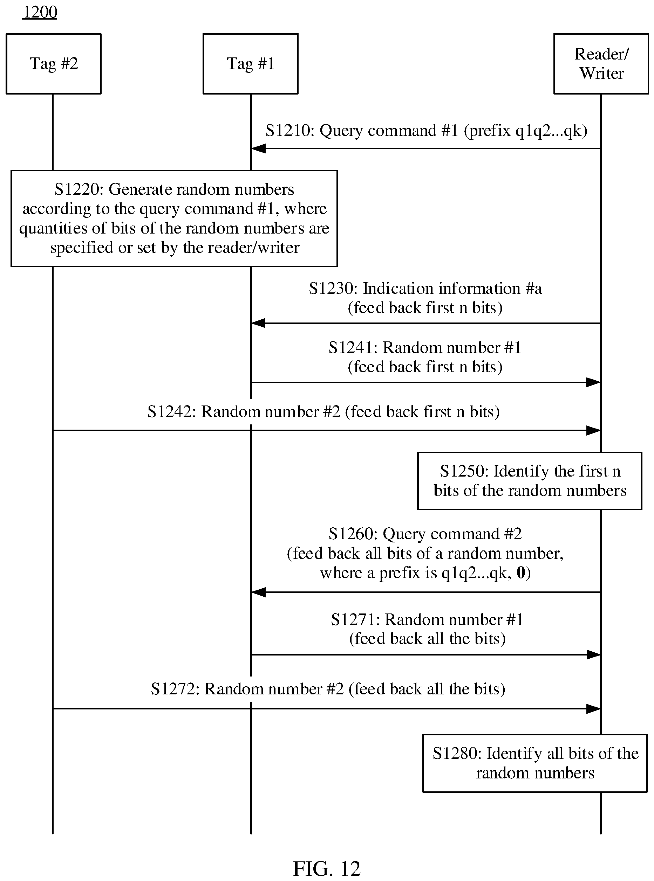

FIG. 12 is a diagram of still another example of a tag identification method 1200 to which an embodiment of this application is applicable. The following describes the technical solutions of this application by using an example in which execution bodies are a reader/writer and tags. The following specific implementation steps are included.

S1210: The reader/writer broadcasts a query command #1 (that is, an example of a first command).

Correspondingly, the tags (for example, a tag #1 and a tag #2) within coverage of the reader/writer receive the query command #1 from the reader/writer.

The query command #1 includes prefix information *qlq2...qk* (that is, an example of first prefix information), and k is an integer greater than or equal to 1.

A quantity of bits of a random number may be specified by the reader/writer by using first information, and the first information may be separately sent by the reader/writer, or may be carried in the first command; or a quantity of bits of a random number is set. This is not specifically limited in this application.

In a possible implementation, the reader/writer may send first information, to indicate a quantity of bits generated by a random number. For example, the tag is indicated to generate a 16-bit random number.

In another possible implementation, if there is no first information that indicates the quantity of bits generated by the tag, the tag generates an M-bit random number by default, where the M bits may be a specified value. For example, M=16.

S1220: The tag #1 and the tag #2 (for example, a second device and a third device) generate a random number #1 and a random number #2 (that is, examples of a first random number and a second random number) respectively according to the query command #1.

For example, the quantity of bits of the random number is specified by the reader/writer, or the quantity of bits of the random number is set to 16. In this case, the random number generated by the tag #1 may be *qlq2...qk,* 1011, ..., 0101, the random number generated by the tag #2 may be *qlq2...qk,* 1001, ..., 0110, and the quantities of bits of the random numbers are 16.

S1230: The reader/writer sends indication information #a (that is, an example of fifth information) to the tags.

Correspondingly, the tags (for example, the tag #1 and the tag #2) receive the indication information #a from the reader/writer.

The query indication information #a indicates the tags to feed back first n bits. For example, n=8.

It should be understood that, in this implementation, the reader/writer first inventories first n bits of a random number. This can reduce feedback overheads and a delay.

Optionally, the indication information #a may be carried in and sent together with the query command #1, that is, step S1230 may be omitted; or the indication information #a may be separately sent. This is not specifically limited in this application.

S1241: The tag #1 sends the random number #1 (that is, an example of first n bits of the first random number) to the reader/writer.

Correspondingly, the reader/writer receives the random number #1 from the tag #1.

S1242: Similarly, the tag #2 sends the random number #2 (that is, an example of first n bits of the second random number) to the reader/writer.

Correspondingly, the reader/writer receives the random number #2 from the tag #2.

The random number #1 and the random number #2 each include n bits.

It should be noted that, the tag compares first k bits of the random number with the prefix information (for example, *q*1*q*2*...q*k) to determine whether they match, and if they match, the first n bits of the random number are fed back. The first n bits may be first n bits of the complete random number, or may be first n bits of the random number except a prefix.

For example, quantities of bits of the two random numbers generated by the tags are 16. Prefix information sent by the reader/writer is 0101, the random number #1 generated by the tag #1 may be 0101101111010101, and the random number #2 generated by the tag #2 may be 0101100111100110. For example, if n=8, the random number fed back by the tag #1 may be 01011011, and the random number fed back by the tag #2 may be 01011001; or the random number fed back by the tag #1 may be 10111101, and the random number fed back by the tag #2 may be 10011110.

It should be noted that, if the reader/writer does not send the indication information #a, m bits may be fed back first based on a setting. This implementation can reduce tag feedback overheads and a delay. A specific implementation is similar to that in the foregoing steps. Details are not described herein again.

S1250: The reader/writer performs collision detection and identification on the first n bits of the random number #1 and the first n bits of the random number #2.

For a specific implementation, refer to the foregoing method 800 and method 1000. For brevity, details are not described herein again.

S1260: The reader/writer broadcasts a query command #2.

Correspondingly, the tags (for example, the tag #1 and the tag #2) within the coverage of the reader/writer receive the query command #2 from the reader/writer.

The query command #2 includes indication information #b (an example of sixth information) indicating the tags to feed back all bit information. For example, n=16.

Optionally, the reader/writer may adjust a value of n, so that the tags gradually increase length of feedback information until the reader/writer fully identifies all the tags.

Optionally, the indication information #b may alternatively be separately sent. This is not specifically limited in this application.

S1271: The tag #1 sends the random number #1 (that is, the example of the first random number) to the reader/writer.

Correspondingly, the reader/writer receives the random number #1 from the tag #1.

S1272: Similarly, the tag #2 sends the random number #2 (that is, the example of the second random number) to the reader/writer.

Correspondingly, the reader/writer receives the random number #2 from the tag #2.

The random number #1 and the random number #2 include all bits.

For example, prefix information sent by the reader/writer is 0101, the random number #1 generated and sent by the tag #1 is 0101101111010101, the random number #2 generated and sent by the tag #2 is 0101100111100110, and the quantities of bits of the two random numbers are 16.

S1280: The reader/writer performs collision detection and identification on all the bits of the random number #1 and all the bits of the random number #2.

For a specific implementation, refer to the foregoing method 800 and method 1000. A method based on another identifier type inventory may alternatively be used. This is not specifically limited in this application. For brevity, details are not described herein.

It should be noted that the provided implementations are merely examples for description, and should not constitute any limitation on the technical solutions of this application. For example, a quantity of bits of a random number fed back and detected each time may be the same or may be different. A quantity of feedback times of bit information of a random number is not specifically limited in this application. A quantity of bits of a random number fed back each time may be variable, or may be fixed, may be predetermined in advance, or may be indicated by the reader/writer by using a plurality of times of information. The plurality of times are not specifically limited in this application.

It should be further noted that, in the foregoing implementation, segment-based feedback and identification of a random number are used as examples, which is merely an example for description. The technical solutions of this application are also applicable to segment-based feedback and identification of identifier information of a tag. An identifier of the tag may be generated by the tag itself or allocated by another device, for example, a base station or a core network device. A specific implementation is similar. Details are not described herein again.

In the technical solutions of this application, unless otherwise specified or a logical conflict occurs, the plurality of implementations provided above may be separately used, or may be used in combination. For example, a segment identification manner is also applicable to the method 700 to the method 1000. Specifically, the reader/writer may send instruction information to at least one tag, where the instruction information includes a quantity of bits (a random number or identifier information) fed back by the tag, and the quantity of bits fed back by the tag may be remaining bit information (a random number or identifier information) after a prefix is matched, or may be a complete random number or identifier information, or the like. This is not specifically limited in this application.

It should be understood that this implementation is applicable to a multi-bit query tree MQT, a slotted-aloha-based access manner, or another manner. This is not specifically limited in this application.

In this implementation, a random number is used to replace identifier information of a tag for feedback and collision detection, and a new inventory method is provided. In addition, when a quantity of bits of the random number that is fed back is less than that of the identifier information, this can further reduce transmission signaling overheads and a contention access delay.

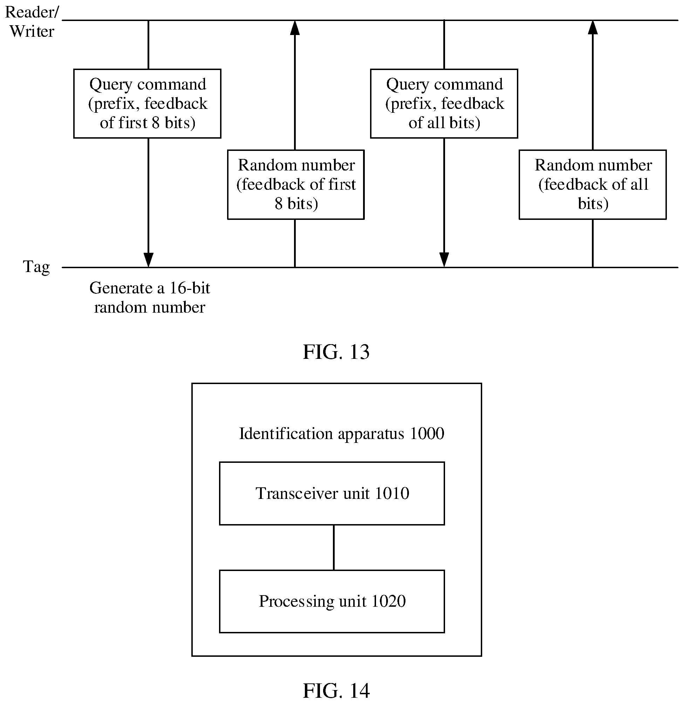

FIG. 13 is a diagram of an example of a multi-bit collision tree-based inventory procedure to which an embodiment of this application is applicable. As shown in FIG. 13, a reader/writer sends a query command (for example, Query), to indicate a tag to feed back first 8 bits of a random number, and indicate the tag to generate a 16-bit random number. A tag #1 and a tag #2 each generate the 16-bit random number according to the query command and indication information. It is assumed that prefix information sent by the reader/writer is 0101, the random number #1 generated by the tag #1 may be 0101101111010101, and the random number #2 generated by the tag #2 may be 0101100111100110. Correspondingly, the random number fed back by the tag #1 may be 01011011, and the random number fed back by the tag #2 may be 01011001. After completing detection and identification of the first 8 bits, the reader/writer resends a query command Query to the tag, to indicate the tag to feed back all bits of the random number, that is, 16 bits. In this case, the tag #1 feeds back 0101101111010101 to the reader/writer, and the tag #2 feeds back 0101100111100110 to the reader/writer. The reader/writer then performs collision detection of subsequent 8 bits based on the two random numbers until the tag #1 and the tag #2 are identified. Finally, the tags and a network can communicate with each other normally.

In this implementation, the tags feed back only a part of information in an inventory process or a random access process. This reduces transmission overheads. The reader/writer implements low-delay and low-overhead tag inventory by indicating tag feedback bit length.

In conclusion, according to the technical solutions provided in this application, the random number is used to replace the complete identifier for inventory, and this reduces an inventory delay and transmission signaling overheads. When synchronization of transmission bits of a plurality of tags are not met, a common collision tree method may be used to implement normal inventory of the tags. The reader/writer may send indication information instead of sending the complete prefix information, that is, use the indication information to indicate a relationship between a prefix in a current query command and a previously sent prefix, and this reduces overheads. Segment identification of a long tag identifier reduces extra overheads and an inventory delay. In addition, re-encoding based on consecutive and discrete collision bits improves inventory efficiency.

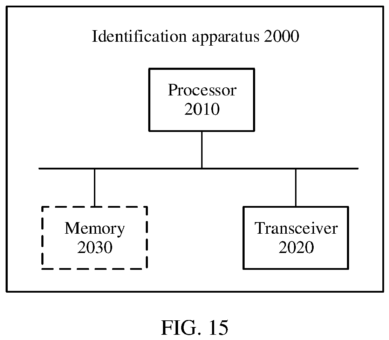

The foregoing describes in detail embodiments on a communication method side of this application with reference to FIG. 1 to FIG. 13. The following describes in detail embodiments on a communication apparatus side of this application with reference to FIG. 14 and FIG. 15. It should be understood that descriptions of the apparatus embodiments correspond to the descriptions of the method embodiments, and therefore for a part that is not described in detail, refer to the foregoing method embodiments.

FIG. 14 is a block diagram of an identification apparatus according to an embodiment of this application. As shown in FIG. 14, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement steps or procedures performed by the first device (for example, the reader/writer) in the foregoing method embodiments. The processing unit 1020 is configured to perform processing-related operations of the first device in the foregoing method embodiments, and the transceiver unit 1010 is configured to perform receiving and sending-related operations of the first device in the foregoing method embodiments.

For example, the transceiver unit 1010 is configured to send, by a first device, a first command to at least one device, where the at least one device includes a second device, the first command is used by the at least one device to obtain first prefix information, the first prefix information includes k bits, and k is an integer greater than or equal to 1.

The transceiver unit 1010 is further configured to receive, by the first device, a first random number from a second device, and the first random number corresponds to the first prefix information.

The processing unit 1020 is configured to determine, by the first device based on the first random number, that the second device accesses the first device.

In another possible design, the apparatus 1000 may implement steps or procedures performed by the at least one device (for example, the second device or the tag) in the foregoing method embodiments. The transceiver unit 1010 is configured to perform receiving and sending-related operations of the second device in the foregoing method embodiments, and the processing unit 1020 is configured to perform processing-related operations of the second device in the foregoing method embodiments.

For example, the transceiver unit 1010 is configured to receive, by a second device, a first command from a first device, where at least one device includes the second device, the first command is used by the at least one device to obtain first prefix information, the first prefix information includes k bits, and k is an integer greater than or equal to 1.

The processing unit 1020 is configured to generate, by the second device, a first random number according to the first command, where the first random number corresponds to the first prefix information.

The transceiver unit 1010 is further configured to send, by the second device, the first random number to the first device.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

For example, a person skilled in the art may understand that the apparatus 1000 may be specifically the first device (for example, a reader/writer) in the foregoing embodiments, and may be configured to perform procedures and/or steps corresponding to the first device (for example, the reader/writer) in the foregoing method embodiments, or the apparatus 1000 may be specifically the second device (for example, a tag) in the foregoing embodiments, and may be configured to perform procedures and/or steps corresponding to the second device (for example, the tag) in the foregoing method embodiments. To avoid repetition, details are not described herein again.

The apparatus 1000 in each of the foregoing solutions has a function of implementing a corresponding step performed by the first device (for example, the reader/writer) in the foregoing method, or the apparatus 1000 in each of the foregoing solutions has a function of implementing a corresponding step performed by the second device (for example, the tag) in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform a sending and receiving operation and a related processing operation in the method embodiments.

In addition, the transceiver unit may alternatively be a transceiver circuit (for example, may include a receiving circuit and a sending circuit), and the processing unit may be a processing circuit. In embodiments of this application, the apparatus in FIG. 14 may be the second device (for example, the tag) or the first device (for example, the reader/writer) in the foregoing embodiments, or may be a chip or a chip system, for example, a system-on-a-chip (system on chip, SoC). The transceiver unit may be an input/output circuit or a communication interface. The processing unit is a processor a microprocessor or an integrated circuit integrated on the chip. This is not limited herein.

FIG. 15 is a diagram of another example of an identification apparatus according to an embodiment of this application. As shown in FIG. 15, the apparatus 2000 includes a processor 2010, a transceiver 2020, and a memory 2030. The processor 2010, the transceiver 2020, and the memory 2030 communicate with each other via an internal connection path. The memory 2030 is configured to store instructions. The processor 2010 is configured to execute the instructions stored in the memory 2030, to control the transceiver 2020 to send a signal and/or receive a signal.

It should be understood that the apparatus 2000 may correspond to the second device (for example, the tag) in the foregoing method embodiments, and may be configured to perform steps and/or procedures performed by the first device (for example, the reader/writer) in the foregoing method embodiments.

Optionally, the memory 2030 may include a read-only memory and a random access memory, and provide instructions and data to the processor. A part of the memory may further include a non-volatile random access memory. The memory 2030 may be an independent device, or may be integrated into the processor 2010. The processor 2010 may be configured to execute the instructions stored in the memory 2030, and when the processor 2010 executes the instructions stored in the memory, the processor 2010 is configured to perform steps and/or procedures corresponding to the at least one device (for example, the second device or the tag)/the first device (for example, the reader/writer) in the foregoing method embodiments.

In a possible implementation, the apparatus 2000 is the first device (for example, the reader/writer) in the foregoing embodiments.

For example, the transceiver 2020 is configured to send, by a first device, a first command to at least one device, where the at least one device includes a second device, the first command is used by the at least one device to obtain first prefix information, the first prefix information includes k bits, and k is an integer greater than or equal to 1.

The transceiver 2020 is further configured to receive, by the first device, a first random number from a second device, and the first random number corresponds to the first prefix information.

The processor 2010 is configured to determine, by the first device based on the first random number, that the second device accesses the first device.

In another possible implementation, the apparatus 2000 is the second device (for example, the tag) in the foregoing embodiments.

The transceiver 2020 is configured to receive, by a second device, a first command from a first device, where the second device is one of at least one device, the first command is used by the at least one device to obtain first prefix information, the first prefix information includes k bits, and k is an integer greater than or equal to 1.

The processor 2010 is configured to generate, by the second device, a first random number according to the first command, where the first random number corresponds to the first prefix information.

The transceiver 2020 is further configured to send, by the second device, the first random number to the first device.

The transceiver 2020 may include a transmitter and a receiver. The processor 2010, the memory 2030, and the transceiver 2020 may be components integrated on different chips. For example, the processor 2010 and the memory 2030 may be integrated into a baseband chip, and the transceiver 2020 may be integrated into a radio frequency chip. Alternatively, the processor 2010, the memory 2030, and the transceiver 2020 may be components integrated on a same chip. This is not limited in this application.

Optionally, the apparatus 2000 is a component, like a circuit, a chip, or a chip system, configured in the first device and/or at least one device (for example, the second device).

Alternatively, the transceiver 2020 may be a communication interface, like an input/output interface or a circuit. The transceiver 2020, the processor 2010, and the memory 2020 may be integrated into a same chip, for example, integrated into the baseband chip.

It should be understood that specific examples in embodiments of this application are merely intended to help a person skilled in the art better understand the technical solutions of this application. The foregoing specific implementations may be considered as optimal implementations of this application, but are not intended to limit the scope of embodiments of this application.

According to the method provided in embodiments of this application, this application further provides a computer program product. The computer program product includes computer program code. When the computer program code is run on a computer, the computer is enabled to perform the method in the embodiment shown in FIG. 7.

According to the method provided in embodiments of this application, this application further provides a computer-readable medium. The computer-readable medium stores program code. When the program code is run on a computer, the computer is enabled to perform the method in the embodiment shown in FIG. 7.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An identification method, comprising:
sending, by a first device, a first command to at least one device, wherein the at least one device comprises a second device, the first command is used by the at least one device to obtain first prefix information, the first prefix information comprises k bits, and k is an integer greater than or equal to 1;
receiving, by the first device, a first random number from the second device, wherein the first random number corresponds to the first prefix information; and
determining, by the first device based on the first random number, that the second device accesses the first device.

2. The method according to claim 1, wherein
a quantity of bits of the first random number is set, or
the method further comprises:
sending, by the first device, first information to the at least one device, wherein the first information comprises information about a quantity of bits of the first random number.

3. The method according to claim 1 or 2, wherein the at least one device further comprises a third device, and before the determining, by the first device based on the first random number, that the second device accesses the first device, the method further comprises:
receiving, by the first device, a second random number from the third device, wherein the second random number corresponds to the first prefix information;
performing, by the first device, bit collision detection on the first random number and the second random number, to determine a target collision bit i, wherein i is an integer greater than k and less than or equal to k+m, the first random number comprises first suffix information, the second random number comprises second suffix information, both the first suffix information and the second suffix information comprise m bits, and m is an integer greater than or equal to 1;
generating, by the first device, second prefix information and third prefix information based on the target collision bit i, wherein both the second prefix information and the third prefix information comprise i bits, and the second prefix information and the third prefix information comprise at least a part of the first prefix information; and
sending, by the first device, a second command and a third command to the at least one device, wherein the second command is used by the at least one device to obtain the second prefix information, and the third command is used by the at least one device to obtain the third prefix information.

4. The method according to claim 1 or 2, wherein the at least one device further comprises a third device, and the determining, by the first device based on the first random number, that the second device accesses the first device comprises:
receiving, by the first device, a second random number from the third device, wherein the second random number corresponds to the first prefix information;
determining, by the first device, that the second random number is the same as the first random number;
sending, by the first device, second information to the at least one device, wherein the second information indicates the at least one device to re-generate a random number;
receiving, by the first device, a third random number from the second device, and receiving a fourth random number from the third device; and
determining, by the first device based on the third random number and the fourth random number, that the second device and the third device access the first device.

5. The method according to claim 1 or 2, wherein the at least one device further comprises a third device, and the determining, by the first device based on the first random number, that the second device accesses the first device comprises:
receiving, by the first device, a second random number from the third device, wherein the second random number corresponds to the first prefix information;
determining, by the first device, that the second random number is the same as the first random number;
sending, by the first device, third information to the at least one device, wherein the third information indicates the at least one device to resend a random number;
receiving, by the first device, the first random number from the second device in a first time unit, and receiving the second random number from the third device in a second time unit, wherein the first time unit and the second time unit are randomly selected by the second device and the third device respectively; and
determining, by the first device based on the first time unit and the second time unit, that the second device and the third device access the first device.

6. The method according to claim 1 or 2, wherein the at least one device further comprises a third device, and before the determining, by the first device based on the first random number, that the second device accesses the first device, the method further comprises:
receiving, by the first device, a second random number from the third device, wherein the second random number corresponds to the first prefix information;
generating, by the first device, fourth prefix information and fifth prefix information after determining that the first random number collides with the second random number, wherein the fourth prefix information and the fifth prefix information each comprise k+1 bits, and the fourth prefix information and the fifth prefix information comprise at least a part of the first prefix information; and
sending, by the first device, a fourth command and a fifth command to the at least one device, wherein the fourth command is used by the at least one device to obtain the fourth prefix information, and the fifth command is used by the at least one device to obtain the fifth prefix information.

7. The method according to claim 1 or 2, wherein the at least one device further comprises a third device, and the determining, by the first device based on the first random number, that the second device accesses the first device comprises:
receiving, by the first device, a second random number from the third device, wherein the second random number corresponds to the first prefix information, the first random number comprises first suffix information, the second random number comprises second suffix information, both the first suffix information and the second suffix information comprise m bits, and m is an integer greater than or equal to 1;
sending, by the first device, fourth information to the at least one device after determining that the first random number collides with the second random number, wherein the fourth information indicates the at least one device to update p bits in suffix information in a random number, and p is an integer greater than or equal to 1 and less than or equal to m;
receiving, by the first device, an updated first random number from the second device and an updated second random number from the third device, wherein the updated first random number comprises updated first suffix information, and the updated second random number comprises updated second suffix information; and
determining, by the first device based on the updated first random number and the updated second random number, that the second device and the third device access the first device.

8. The method according to claim 7, wherein P is a quantity of bits at which the first random number collides with the second random number; and
if consecutive collision occurs between the first random number and the second random number, the fourth information indicates a value of p; or
if discrete collision occurs between the first random number and the second random number, the fourth information indicates a bit at which the first random number collides with the second random number.

9. The method according to claim 1 or 2, wherein the at least one device further comprises a third device, and the receiving, by the first device, a first random number from the second device comprises:
receiving, by the first device, first n bits of the first random number from the second device, and performing collision detection between the first n bits of the first random number and first n bits of a second random number from the third device, wherein n is an integer greater than or equal to 1 and less than k+m, the first random number comprises first suffix information, the second random number comprises second suffix information, both the first suffix information and the second suffix information comprise m bits, and m is an integer greater than or equal to 1;
after determining that first s bits of the first random number do not collide with first s bits of the second random number, sending, by the first device, fifth information to the at least one device, wherein s is a positive integer less than or equal to n, the fifth information indicates the at least one device to send first q bits of a random number, and q is an integer greater than n and less than k+m;
receiving, by the first device, first q bits of the first random number from the second device, and performing collision detection on the first q bits of the first random number and first q bits of the second random number from the third device;
after determining that first t bits of the first random number do not collide with first t bits of the second random number, sending, by the first device, sixth information to the at least one device, wherein t is a positive integer greater than or equal to s and less than or equal to q, and the sixth information indicates the at least one device to send a random number generated according to the first command;
receiving, by the first device, the first random number from the second device, and performing collision detection on the first random number and the second random number from the third device, wherein the first random number and the second random number comprise k+m bits; and
after determining that the first random number does not collide with the second random number, determining, by the first device, that the second device and the third device access the first device.

10. The method according to claim 9, wherein the first command further indicates a value of n and/or a value of q.

11. A tag identification method, comprising:
receiving, by a second device, a first command from a first device, wherein the second device is one of at least one device, the first command is used by the at least one device to obtain first prefix information, the first prefix information comprises k bits, and k is an integer greater than or equal to 1;
generating, by the second device, a first random number according to the first command, wherein the first random number corresponds to the first prefix information; and
sending, by the second device, the first random number to the first device.

12. The method according to claim 11, wherein
a quantity of bits of the first random number is set, or
the method further comprises:
receiving, by the second device, first information from the first device, wherein the first information comprises information about a quantity of bits of the first random number; and
determining, by the second device, the quantity of bits of the first random number based on the first information.

13. The method according to claim 11 or 12, wherein the at least one device further comprises a third device, a second random number generated by the third device according to the first command corresponds to the first prefix information, and after the sending, by the second device, the first random number to the first device, the method further comprises:
receiving, by the second device, a second command and a third command from the first device, wherein the second command is used by the at least one device to obtain second prefix information, the third command is used by the at least one device to obtain third prefix information, the second prefix information and the third prefix information are determined based on a target collision bit i, the target collision bit i is determined based on bit collision detection of the first random number and the second random number, both the second prefix information and the third prefix information comprise i bits, the second prefix information and the third prefix information comprise at least a part of the first prefix information, and i is an integer greater than k and less than or equal to k+m; and
resending, by the second device, the first random number to the first device according to the second command.

14. The method according to claim 11 or 12, wherein the at least one device further comprises a third device, a second random number generated by the third device according to the first command corresponds to the first prefix information, and after the sending, by the second device, the first random number to the first device, the method further comprises:
when the first random number is the same as the second random number, receiving, by the second device, second information from the first device, wherein the second information indicates the at least one device to re-generate a random number;
generating, by the second device, a third random number based on the second information, wherein the third random number corresponds to the first prefix information; and
sending, by the second device, the third random number to the first device.

15. The method according to claim 11 or 12, wherein the at least one device further comprises a third device, a second random number generated by the third device according to the first command corresponds to the first prefix information, and after the sending, by the second device, the first random number to the first device, the method further comprises:
when the first random number is the same as the second random number, receiving, by the second device, third information from the first device, wherein the third information indicates the at least one device to resend a random number; and
sending, by the second device, the first random number to the first device in a first time unit based on the third information, wherein the first time unit is randomly selected by the second device.

16. The method according to claim 11 or 12, wherein the at least one device further comprises a third device, a second random number generated by the third device according to the first command corresponds to the first prefix information, and after the sending, by the second device, the first random number to the first device, the method further comprises:
after the first random number collides with the second random number, receiving, by the second device, a fourth command and a fifth command from the first device, wherein the fourth command is used by the at least one device to obtain fourth prefix information, the fifth command is used by the at least one device to obtain fifth prefix information, the fourth prefix information and the fifth prefix information are determined based on bit collision detection of the first random number and the second random number, the fourth prefix information and the fifth prefix information each comprise k+1 bits, and the fourth prefix information and the fifth prefix information comprise at least a part of the first prefix information; and
resending, by the second device, the first random number to the first device according to the fourth command.

17. The method according to claim 11 or 12, wherein the at least one device further comprises a third device, a second random number generated by the third device according to the first command corresponds to the first prefix information, and after the sending, by the second device, the first random number to the first device, the method further comprises:
after the first random number collides with the second random number, receiving, by the second device, fourth information from the first device, wherein the fourth information indicates the at least one device to update p bits in suffix information in a random number, the first random number comprises first suffix information, the first suffix information comprises m bits, m is an integer greater than or equal to 1, and p is an integer greater than or equal to 1 and less than or equal to m;
updating, by the second device, p bits in the first suffix information in the first random number based on the fourth information; and
sending, by the second device, an updated first random number to the first device.

18. The method according to claim 17, wherein P is a quantity of bits at which the first random number collides with the second random number; and
if consecutive collision occurs between the first random number and the second random number, the fourth information indicates a value of p; or
if discrete collision occurs between the first random number and the second random number, the fourth information indicates a bit at which the first random number collides with the second random number.

19. The method according to claim 11 or 12, wherein the at least one device further comprises a third device, a second random number generated by the third device according to the first command corresponds to the first prefix information, and the sending, by the second device, the first random number to the first device comprises:
sending, by the second device, first n bits of the first random number to the first device, wherein n is an integer greater than or equal to 1 and less than k+m, the first random number comprises first suffix information, the first suffix information comprises m bits, and m is an integer greater than or equal to 1;
after first s bits of the first random number do not collide with first s bits of the second random number, receiving, by the second device, fifth information from the first device, wherein s is a positive integer less than or equal to n, the fifth information indicates the at least one device to send first q bits of a random number, and q is an integer greater than n and less than k+m;
sending, by the third device, first q bits of the first random number to the first device based on the fifth information;
when first t bits of the first random number do not collide with first t bits of the second random number, receiving, by the second device, sixth information from the first device, wherein t is a positive integer greater than or equal to s and less than or equal to q, the sixth information indicates the at least one device to send a random number generated according to the first command; and
sending, by the second device, the first random number to the first device based on the sixth information.

20. The method according to claim 19, wherein the first command further indicates a value of n and/or a value of q.

21. An identification apparatus, comprising:
a transceiver unit, configured to send, by a first device, a first command to at least one device, wherein the at least one device comprises a second device, the first command is used by the at least one device to obtain first prefix information, the first prefix information comprises k bits, and k is an integer greater than or equal to 1; and
the transceiver unit is further configured to receive, by the first device, a first random number from the second device, and the first random number corresponds to the first prefix information; and
a processing unit, configured to determine, by the first device based on the first random number, that the second device accesses the first device.

22. The apparatus according to claim 21, wherein
a quantity of bits of the first random number is set, or
the transceiver unit is further configured to send, by the first device, first information to the at least one device, wherein the first information comprises information about a quantity of bits of the first random number.

23. The apparatus according to claim 21 or 22, wherein the at least one device further comprises a third device, and the transceiver unit is further configured to receive, by the first device, a second random number from the third device, wherein the second random number corresponds to the first prefix information;
the processing unit is further configured to perform, by the first device, bit collision detection on the first random number and the second random number, to determine a target collision bit i, wherein i is an integer greater than k and less than or equal to k+m, the first random number comprises first suffix information, the second random number comprises second suffix information, both the first suffix information and the second suffix information comprise m bits, and m is an integer greater than or equal to 1;
the processing unit is further configured to generate, by the first device, second prefix information and third prefix information based on the target collision bit i, wherein both the second prefix information and the third prefix information comprise i bits, and the second prefix information and the third prefix information comprise at least a part of the first prefix information; and
the transceiver unit is further configured to send, by the first device, a second command and a third command to the at least one device, wherein the second command is used by the at least one device to obtain the second prefix information, and the third command is used by the at least one device to obtain the third prefix information.

24. The apparatus according to claim 21 or 22, wherein the at least one device further comprises a third device, and the receiving unit is further configured to receive, by the first device, a second random number from the third device, wherein the second random number corresponds to the first prefix information;
the processing unit is further configured to determine, by the first device, that the second random number is the same as the first random number;
the transceiver unit is further configured to send, by the first device, second information to the at least one device, wherein the second information indicates the at least one device to re-generate a random number;
the transceiver unit is further configured to receive, by the first device, a third random number from the second device, and receive a fourth random number from the third device; and
the processing unit is further configured to determine, by the first device based on the third random number and the fourth random number, that the second device and the third device access the first device.

25. The apparatus according to claim 21 or 22, wherein the at least one device further comprises a third device, and the receiving unit is further configured to receive, by the first device, a second random number from the third device, wherein the second random number corresponds to the first prefix information;
the processing unit is further configured to determine, by the first device, that the second random number is the same as the first random number;
the transceiver unit is further configured to send, by the first device, third information to the at least one device, wherein the third information indicates the at least one device to resend a random number;
the transceiver unit is further configured to receive, by the first device, the first random number from the second device in a first time unit, and receive the second random number from the third device in a second time unit, wherein the first time unit and the second time unit are randomly selected by the second device and the third device respectively; and
the processing unit is further configured to determine, by the first device based on the first time unit and the second time unit, that the second device and the third device access the first device.

26. The apparatus according to claim 21 or 22, wherein the at least one device further comprises a third device, and the transceiver unit is further configured to receive, by the first device, a second random number from the third device, wherein the second random number corresponds to the first prefix information;
the processing unit is further configured to generate, by the first device, fourth prefix information and fifth prefix information after it is determined that the first random number collides with the second random number, wherein the fourth prefix information and the fifth prefix information each comprise k+1 bits, and the fourth prefix information and the fifth prefix information comprise at least a part of the first prefix information; and
the transceiver unit is further configured to send, by the first device, a fourth command and a fifth command to the at least one device, wherein the fourth command is used by the at least one device to obtain the fourth prefix information, and the fifth command is used by the at least one device to obtain the fifth prefix information.

27. The apparatus according to claim 21 or 22, wherein the at least one device further comprises a third device, and the transceiver unit is further configured to:
receive, by the first device, a second random number from the third device, wherein the second random number corresponds to the first prefix information, the first random number comprises first suffix information, the second random number comprises second suffix information, both the first suffix information and the second suffix information comprise m bits, and m is an integer greater than or equal to 1;
send, by the first device, fourth information to the at least one device after it is determined that the first random number collides with the second random number, wherein the fourth information indicates the at least one device to update p bits in suffix information in a random number, and p is an integer greater than or equal to 1 and less than or equal to m; and
receive, by the first device, an updated first random number from the second device and an updated second random number from the third device, wherein the updated first random number comprises updated first suffix information, and the updated second random number comprises updated second suffix information; and
the processing unit is further configured to determine, by the first device based on the updated first random number and the updated second random number, that the second device and the third device access the first device.

28. The apparatus according to claim 27, wherein P is a quantity of bits at which the first random number collides with the second random number; and
if consecutive collision occurs between the first random number and the second random number, the fourth information indicates a value of p; or
if discrete collision occurs between the first random number and the second random number, the fourth information indicates a bit at which the first random number collides with the second random number.

29. The apparatus according to claim 21 or 22, wherein the at least one device further comprises a third device, and the transceiver unit is further configured to:
receive, by the first device, first n bits of the first random number from the second device, and perform collision detection between the first n bits of the first random number and first n bits of a second random number from the third device, wherein n is an integer greater than or equal to 1 and less than k+m, the first random number comprises first suffix information, the second random number comprises second suffix information, both the first suffix information and the second suffix information comprise m bits, and m is an integer greater than or equal to 1;
after it is determined that first s bits of the first random number do not collide with first s bits of the second random number, send, by the first device, fifth information to the at least one device, wherein s is a positive integer less than or equal to n, the fifth information indicates the at least one device to send first q bits of a random number, and q is an integer greater than n and less than k+m;
receive, by the first device, first q bits of the first random number from the second device, and perform collision detection on the first q bits of the first random number and first q bits of the second random number from the third device;
after it is determined that first t bits of the first random number do not collide with first t bits of the second random number, send, by the first device, sixth information to the at least one device, wherein t is a positive integer greater than or equal to s and less than or equal to q, and the sixth information indicates the at least one device to send a random number generated according to the first command; and
receive, by the first device, the first random number from the second device, and perform collision detection on the first random number and the second random number from the third device, wherein the first random number and the second random number comprise k+m bits; and
the processing unit is further configured to: after it is determined that the first random number does not collide with the second random number, determine, by the first device, that the second device and the third device access the first device.

30. The apparatus according to claim 29, wherein the first command further indicates a value of n and/or a value of q.

31. A tag identification apparatus, comprising:
a transceiver unit, configured to receive, by a second device, a first command from a first device, wherein the second device is one of at least one device, the first command is used by the at least one device to obtain first prefix information, the first prefix information comprises k bits, and k is an integer greater than or equal to 1; and
a processing unit, configured to generate, by the second device, a first random number according to the first command, wherein the first random number corresponds to the first prefix information; and
the transceiver unit is further configured to send, by the second device, the first random number to the first device.

32. The apparatus according to claim 31, wherein
a quantity of bits of the first random number is set, or
the transceiver unit is further configured to receive, by the second device, first information from the first device, wherein the first information comprises information about a quantity of bits of the first random number; and
the processing unit is further configured to determine, by the second device, the quantity of bits of the first random number based on the first information.

33. The apparatus according to claim 31 or 32, wherein the at least one device further comprises a third device, a second random number generated by the third device according to the first command corresponds to the first prefix information, and the transceiver unit is further configured to:
receive, by the second device, a second command and a third command from the first device, wherein the second command is used by the at least one device to obtain second prefix information, the third command is used by the at least one device to obtain third prefix information, the second prefix information and the third prefix information are determined based on a target collision bit i, the target collision bit i is determined based on bit collision detection of the first random number and the second random number, both the second prefix information and the third prefix information comprise i bits, the second prefix information and the third prefix information comprise at least a part of the first prefix information, and i is an integer greater than k and less than or equal to k+m; and
resend, by the second device, the first random number to the first device according to the second command.

34. The apparatus according to claim 31 or 32, wherein the at least one device further comprises a third device, and a second random number generated by the third device according to the first command corresponds to the first prefix information;
the transceiver unit is further configured to: when the first random number is the same as the second random number, receive, by the second device, second information from the first device, wherein the second information indicates the at least one device to re-generate a random number;
the processing unit is further configured to generate, by the second device, a third random number based on the second information, wherein the third random number corresponds to the first prefix information; and
the transceiver unit is further configured to send, by the second device, the third random number to the first device.

35. The apparatus according to claim 31 or 32, wherein the at least one device further comprises a third device, a second random number generated by the third device according to the first command corresponds to the first prefix information, and the transceiver unit is further configured to:
when the first random number is the same as the second random number, receive, by the second device, third information from the first device, wherein the third information indicates the at least one device to resend a random number; and
send, by the second device, the first random number to the first device in a first time unit based on the third information, wherein the first time unit is randomly selected by the second device.

36. The apparatus according to claim 31 or 32, wherein the at least one device further comprises a third device, a second random number generated by the third device according to the first command corresponds to the first prefix information, and the transceiver unit is further configured to:
after the first random number collides with the second random number, receive, by the second device, a fourth command and a fifth command from the first device, wherein the fourth command is used by the at least one device to obtain fourth prefix information, the fifth command is used by the at least one device to obtain fifth prefix information, the fourth prefix information and the fifth prefix information are determined based on bit collision detection of the first random number and the second random number, the fourth prefix information and the fifth prefix information each comprise k+1 bits, and the fourth prefix information and the fifth prefix information comprise at least a part of the first prefix information; and
resend, by the second device, the first random number to the first device according to the fourth command.

37. The apparatus according to claim 31 or 32, wherein the at least one device further comprises a third device, and a second random number generated by the third device according to the first command corresponds to the first prefix information;
the transceiver unit is further configured to: after the first random number collides with the second random number, receive, by the second device, fourth information from the first device, wherein the fourth information indicates the at least one device to update p bits in suffix information in a random number, the first random number comprises first suffix information, the first suffix information comprises m bits, m is an integer greater than or equal to 1, and p is an integer greater than or equal to 1 and less than or equal to m;
the processing unit is further configured to update, by the second device, p bits in the first suffix information in the first random number based on the fourth information; and
the transceiver unit is further configured to send, by the second device, an updated first random number to the first device.

38. The apparatus according to claim 37, wherein P is a quantity of bits at which the first random number collides with the second random number; and
if consecutive collision occurs between the first random number and the second random number, the fourth information indicates a value of p; or
if discrete collision occurs between the first random number and the second random number, the fourth information indicates a bit at which the first random number collides with the second random number.

39. The apparatus according to claim 31 or 32, wherein the at least one device further comprises a third device, a second random number generated by the third device according to the first command corresponds to the first prefix information, and the transceiver unit is further configured to:
send, by the second device, first n bits of the first random number to the first device, wherein n is an integer greater than or equal to 1 and less than k+m, the first random number comprises first suffix information, the first suffix information comprises m bits, and m is an integer greater than or equal to 1;
after first s bits of the first random number do not collide with first s bits of the second random number, receive, by the second device, fifth information from the first device, wherein s is a positive integer less than or equal to n, the fifth information indicates the at least one device to send first q bits of a random number, and q is an integer greater than n and less than k+m;
send, by the second device, first q bits of the first random number to the first device based on the fifth information;
after first t bits of the first random number do not collide with first t bits of the second random number, receive, by the second device, sixth information from the first device, wherein t is a positive integer greater than or equal to s and less than or equal to q, the sixth information indicates the at least one device to send a random number generated according to the first command; and
send, by the second device, the first random number to the first device based on the sixth information.

40. The apparatus according to claim 39, wherein the first command further indicates a value of n and/or a value of q.

41. A chip system, comprising a processor, configured to invoke a computer program from a memory and run the computer program, so that a first device in which the chip system is installed performs the method according to any one of claims 1 to 10, and/or a second device in which the chip system is installed performs the method according to any one of claims 11 to 20.

42. A computer program product, wherein when the computer program product is executed on a computer, the computer is enabled to perform the method according to any one of claims 1 to 10; or the computer is enabled to perform the method according to any one of claims 11 to 20.

43. A computer-readable storage medium, wherein the computer-readable storage medium stores a computer program, and when the computer program runs, the computer is enabled to perform the method according to any one of claims 1 to 10, or the computer is enabled to perform the method according to any one of claims 11 to 20.
